(19) Europäisches Patentamt
European Patent Office
Office européen des brevets

(11) **EP 4 021 640 B1**

(12) **EUROPÄISCHE PATENTSCHRIFT**

(45) Veröffentlichungstag und Bekanntmachung des Hinweises auf die Patenterteilung:
**03.09.2025  Patentblatt 2025/36**

(21) Anmeldenummer: **20786269.9**

(22) Anmeldetag: **01.10.2020**

(51) Internationale Patentklassifikation (IPC):
**B01L 3/02** *(2006.01)*       **G01N 11/08** *(2006.01)*
**G01N 35/10** *(2006.01)*       **G01F 11/02** *(2006.01)*

(52) Gemeinsame Patentklassifikation (CPC):
**B01L 3/0237; G01F 11/029;** B01L 2200/146;
B01L 2200/147; B01L 2200/148; B01L 2400/043;
G01N 35/1016

(86) Internationale Anmeldenummer:
**PCT/EP2020/077517**

(87) Internationale Veröffentlichungsnummer:
**WO 2021/064100 (08.04.2021 Gazette 2021/14)**

(54) **VORRICHTUNG UND VERFAHREN ZUM EXAKTEN FLÜSSIGKEITSKLASSEN-UNABHÄNGIGEN PIPETTIEREN**

DEVICE AND METHOD FOR EXACT LIQUID-CLASS-INDEPENDENT PIPETTING

DISPOSITIF ET PROCÉDÉ DE PIPETAGE EXACTE INDÉPENDANT DE LA CLASSE DE LIQUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2019   DE 102019126731**

(43) Veröffentlichungstag der Anmeldung:
**06.07.2022   Patentblatt 2022/27**

(73) Patentinhaber: **Hamilton Bonaduz AG**
**7402 Bonaduz (CH)**

(72) Erfinder:
• **HILTI, Jonas**
**9496 Balzers (CH)**

• **RAST, Jürg**
**8753 Mollis (CH)**

(74) Vertreter: **Ruttensperger Lachnit Trossin Gomoll Patent- und Rechtsanwälte PartG mbB Arnulfstraße 58 80335 München (DE)**

(56) Entgegenhaltungen:
**EP-A1- 0 837 731          EP-B1- 1 250 956**
**WO-A1-2019/060716    WO-A1-2020/074538**
**DE-A1- 102017 201 114**

EP 4 021 640 B1

**Beschreibung**

Die vorliegende Erfindung betrifft eine Pipettiervorrichtung zum Pipettieren, also zum Aspirieren oder/und zum Dispensieren, einer Dosierflüssigkeit unter Vermittlung eines Arbeitsgases, wobei die Pipettiervorrichtung umfasst:

- einen sich längs einer Kanalachse erstreckenden Pipettierkanal,
- einen im Pipettierkanal längs der Kanalachse beweglichen Pipettierkolben,
- einen Aufnahmeraum zur Aufnahme von Dosierflüssigkeit, welcher sich im Pipettierkanal längs der Kanalachse von einer Pipettieröffnung an einem Ende bis zu einer der Pipettieröffnung zugewandten dosierseitigen Kolbenfläche des Pipettierkolbens am anderen Ende erstreckt, wobei im Pipettierkanal unmittelbar an die dosierseitige Kolbenfläche angrenzend Arbeitsgas aufgenommen ist, wobei ein Arbeitsgas-Bezugsvolumen definiert ist durch das Volumen an Arbeitsgas, welches sich, unter einem Arbeitsgas-Referenzdruck stehend, im Aufnahmeraum befindet,
- eine kraftübertragend mit dem Pipettierkolben gekoppelte Antriebsvorrichtung, welche dazu ausgebildet ist, den Pipettierkolben längs der Kanalachse zu verlagern,
- eine Positionserfassungsvorrichtung, welche eine Position des Pipettierkolbens längs der Kanalachse erfasst und ein die erfasste Position repräsentierendes Positionserfassungssignal ausgibt,
- eine Druckerfassungsvorrichtung, welche einen Druck des Arbeitsgases im Pipettierkanal erfasst und ein den erfassten Druck repräsentierendes Druckerfassungssignal ausgibt, und
- eine Steuervorrichtung,

wobei die Steuervorrichtung dazu ausgebildet ist, die Antriebsvorrichtung nach Maßgabe

- des Druckerfassungssignals,
- des Arbeitsgas-Referenzdrucks, und
- eines definierten zu pipettierenden Soll-Dosierflüssigkeitsvolumens

unter Berücksichtigung einer durch die Kolbenbewegung bewirkten druckänderungsinduzierten Änderung des Arbeitsgas-Bezugsvolumens anzusteuern, wobei die Steuervorrichtung weiter dazu ausgebildet ist, die zum Pipettieren des Soll-Dosierflüssigkeitsvolumens erforderliche Kolbenbewegung in mehreren aufeinander folgenden Bewegungsschritten auszuführen.

Die vorliegende Erfindung betrifft außerdem ein Verfahren zum korrekten Pipettieren einer Dosierflüssigkeit mit einer Pipettiervorrichtung.

Die Pipettiervorrichtung und das Pipettierverfahren der vorliegenden Anmeldung betreffen ausschließlich Pipettiervorgänge im sogenannten "Air-Displacement"-Verfahren, bei welchen sich zwischen der zu pipettierenden Dosierflüssigkeit und der ihr zugewandten Kolbenfläche des Pipettierkolbens eine eingeschlossene Arbeitsgasmenge mit einem Arbeitsgasvolumen befindet, das betragsmäßig mindestens in der Größenordnung des Volumens der in den Pipettierkanal aufzunehmenden Dosierflüssigkeit liegt. In der Regel ist das Volumen an zwischen dosierseitiger Kolbenfläche und Dosierflüssigkeit eingeschlossenem Arbeitsgas größer als das Volumen an im Pipettierkanal aufgenommener Dosierflüssigkeit.

Dabei wird in der vorliegenden Anmeldung eine etwaig an der Pipettiervorrichtung angekoppelte Pipettierspitze als Teil des Pipettierkanals angesehen. In der Regel wird Dosierflüssigkeit nur in eine solche Pipettierspitze aspiriert und aus der Pipettierspitze, genauer aus dem in die Pipettierspitze aspirierten Vorrat, dispensiert. Dabei wird weiter die Pipettierspitze in der Regel nicht vollständig mit Dosierflüssigkeit gefüllt. Das Volumen der eingeschlossenen Arbeitsgasmenge beträgt üblicherweise zwischen 50 $\mu l$ und 1000 $\mu l$. Dies gilt für den Stand der Technik ebenso wie für die vorliegende Erfindung.

Dabei ist die Genauigkeit eines Pipettiervorgangs bezüglich der aufgenommenen oder abgegebenen Menge an Dosierflüssigkeit abhängig von Eigenschaften der Dosierflüssigkeit, wie etwa deren Viskosität, deren Dichte, deren Benetzungsverhalten in Bezug auf das Material des Pipettierkanals und deren Oberflächenspannung. Werden unterschiedliche Flüssigkeiten mit unterschiedlichen oben genannten Eigenschaften von derselben Pipettiervorrichtung mit denselben Pipettierparametern, wie etwa Verlagerungsweg und Verlagerungsgeschwindigkeit des Kolbens, pipettiert, kommt es in der Regel für beide Flüssigkeiten zu unterschiedlichen Mengen dispensierter bzw. aspirierter Dosierflüssigkeit, je nachdem in welche Richtung der Pipettiervorgang abläuft.

Diesem Umstand trägt man in der Pipettiertechnologie bisher dadurch Rechnung, dass man Dosierflüssigkeiten in Klassen von Flüssigkeiten mit gleichen oder ausreichend ähnlichen Pipettiereigenschaften einteilt. Für jede so gebildete Flüssigkeitsklasse können dann in einem Datenspeicher der Pipettiervorrichtung Korrekturwerte hinterlegt sein, welche auf Pipettierparameter angewendet werden, um den Pipettierkolben so zu verlagern, dass das pipettierte Ist-Volumen an Dosierflüssigkeit dem zu pipettierenden Soll-Volumen möglichst genau entspricht. So kann beispielsweise für Flüssigkeiten mit besonders hoher Viskosität, die einen hohen Fließwiderstand aufweisen, das durch den Pipettierkolben zurückzurückzulegende Volumen um einen bestimmten Faktor größer sein als das durch die Pipettierkolbenbewegung zu pipettierende Dosierflüssigkeitsvolumen oder/und kann die Verlagerungsgeschwindigkeit des Pipettierkolbens während des Pipettierens ausgehend von einem Standardwert abgesenkt werden, um den hohen Fließwiderstand zu kompensieren und gewünschte Dosierflüssigkeitsmenge möglichst genau zu pipettieren.

Nachteilig ist, dass man die Flüssigkeitsklasse einer zu pipettierenden Flüssigkeit kennen muss, um diese im Air-Displacement-Verfahren möglichst exakt pipettieren zu können. Tatsächlich existieren für zahlreiche Dosierflüssigkeiten Flüssigkeitsklassen und mit den Klassen verbundene Korrekturwerte. Erhebliche Schwierigkeiten treten jedoch dann auf, wenn eine Dosierflüssigkeit unbekannter Klasse pipettiert werden soll, etwa eine Dosierflüssigkeit, die durch Mischung unterschiedlicher Flüssigkeiten entsteht und keiner Flüssigkeitsklasse zugeordnet ist. Dann muss durch aufwändige Versuche entweder die unbekannte Dosierflüssigkeit einer Flüssigkeitsklasse zugeordnet werden oder eine neue Flüssigkeitsklasse erzeugt und definiert werden, um die unbekannte Dosierflüssigkeit korrekt pipettieren zu können.

Eine Pipettiervorrichtung der eingangs genannten Art ist aus der EP 1 250 956 B1 bekannt. Diese Druckschrift offenbart eine Pipettiervorrichtung, bei welcher eine durch eine Bewegung des Pipettierkolbens bewirkte Druckänderung in dem im Pipettierkanal eingeschlossenen Arbeitsgasvolumen berücksichtigt wird, um das im Pipettierkanal eingeschlossene Arbeitsgasvolumen nach Abschluss einer pipettierenden Kolbenbewegung möglichst genau bestimmen zu können und aus dieser möglichst genauen Bestimmung auf das im Pipettierkanal vorhandene Volumen an Dosierflüssigkeit schließen zu können. Die Druckschrift geht dabei nach eigener Erklärung aus von der idealen Gasgleichung. Tatsächlich beruht die in der EP 1 250 956 B1 gelehrte Kompensation der druckänderungsinduzierten Volumenänderung des Arbeitsgases jedoch auf dem Sonderfall des Gesetzes von Boyle-Marriotte, denn die EP 1 250 956 B1 geht von einer rein isothermen Zustandsänderung des Arbeitsgases aus.

Zusätzlich berücksichtigt das aus dieser Druckschrift bekannte Pipettierverfahren eine rein empirisch basierte Dosierflüssigkeit-Restmenge, die nach Ende der pipettierenden Kolbenbewegung durch die Pipettieröffnung des Pipettierkanals - vermutlich trägheitsbedingt - nachströmt. Die EP 1 250 956 B1 schweigt sich zu den genauen Ursachen der nachströmenden Restmenge aus und verweist auf bloße Erfahrungstatbestände zu deren Bestimmung.

Aus der US 5895838 A ist eine Pipettiervorrichtung bekannt, deren Pipettierkanal zwei unterschiedlich temperierte Zonen aufweist, nämlich eine dem Pipettierkolben näher gelegene Zone mit höherer Arbeitsgastemperatur und eine der Pipettieröffnung näher gelegene Zone mit niedrigerer Arbeitsgastemperatur. Wird der Pipettierkolben bewegt, wird somit Arbeitsgas aus einer Zone in die andere bewegt und folglich erwärmt oder abgekühlt, je nach Bewegungsrichtung, was wiederum eine Volumenänderung der erwärmten oder abgekühlten Arbeitsgasmenge zur Folge hat. Die Druckschrift lehrt, das zu pipettierende Soll-Volumen um die temperaturinduzierte Volumenänderung des Arbeitsgases zu korrigieren und ein entsprechend vergrößertes bzw. verkleinertes Soll-Volumen zu pipettieren.

Die in der US 5895838 A gelehrte Temperaturkompensation des Soll-Pipettiervolumens erfolgt gemäß dem Gesetz von Gay-Lussac, welches eine isobare Zustandsänderung, also einen konstanten Druck des erwärmten bzw. abgekühlten Arbeitsgases voraussetzt.

Aus der DE 196 51252 A1 sind außerdem ein Verfahren und eine Vorrichtung zur berührungslosen Bestimmung eines in einem abgeschlossenen Behälter aufgenommenen Materialvolumens bekannt. Hierzu wird genau eine Zustandsgröße, also Druck, Volumen, Temperatur oder Menge, eines in dem abgeschlossenen Behälter enthaltenen Gasanteils betragsmäßig verändert und aus den hierdurch bewirkten Änderungen der übrigen Zustandsgrößen des Gasanteils unter Anwendung der idealen Gasgleichung auf das Gasvolumen und schließlich auf das Materialvolumen geschlossen.

Ausgehend von dem oben Gesagten ist es Aufgabe der vorliegenden Erfindung, eine technische Lehre anzugeben, die ein exaktes Pipettieren von Dosierflüssigkeiten ohne vorherige Bestimmung ihrer Flüssigkeitsklasse sowie ohne vorherige Bestimmung ihrer für ein Pipettieren relevanten physikalischen Eigenschaften, wie Viskosität, Dichte, Benetzungsfähigkeit, Oberflächenspannung und dergleichen, ermöglicht.

Gemäß einem ersten Aspekt der vorliegenden Erfindung wird diese Aufgabe gelöst durch eine Pipettiervorrichtung mit allen Merkmalen des Anspruchs 1. Der Pipettierkanal der erfingungsgemäßen Pipettiervorrichtung weist einen ersten Arbeitsbereich auf, dessen bekannte Basistemperatur in einem niedrigeren Basistemperaturbereich gelegen ist, und einen zweiten Arbeitsbereich aufweist, dessen bekannte Arbeitstemperatur in einem gegenüber dem Basistemperaturbereich erhöhten Arbeitstemperaturbereich gelegen ist, wobei die Steuervorrichtung dazu ausgebildet ist, nach einem ersten Pipettierkolben-Bewegungsschritt für einen nachfolgenden Pipettierkolben-Bewegungsschritt,

- eine erste Korrekturgröße, welche eine druckänderungsinduzierte Volumenänderung eines im ersten Arbeitsbereich gelegenen Teils des im Pipettierkanal eingeschlossenen Arbeitsgasvolumens repräsentiert, auf Grundlage des Positionserfassungssignals, des Druckerfassungssignals und des Arbeitsgas-Referenzdrucks zu ermitteln, und
- eine zweite Korrekturgröße, welche eine sowohl druckänderungs- als auch temperaturänderungsinduzierte Volumenänderung eines im zweiten Arbeitsbereich gelegenen Teils des im Pipettierkanal eingeschlossenen Arbeitsgasvolumens repräsentiert, auf Grundlage des Positionserfassungssignals, des Druckerfassungssignals, des Arbeitsgas-Referenzdrucks, der bekannten Arbeitstemperatur und der bekannten Basistemperatur zu ermitteln,

und ein Soll-Schritt-Bewegungsvolumen des Pipettierkolbens unter Berücksichtigung bzw. auf Grundlage

- eines dem nachfolgenden Pipettierkolben-Bewegungsschritt zugeordneten Schritt-Referenzvolumens,
- eines bisherigen Verlagerungsvolumens der dosierseitigen Kolbenfläche des Pipettierkolbens im aktuellen Pipettiervorgang,
- der ersten Korrekturgröße, und
- der zweiten Korrekturgröße

zu ermitteln und die Antriebsvorrichtung nach Maßgabe des ermittelten Soll-Schritt-Bewegungsvolumens anzusteuern.

Der Arbeitsgas-Referenzdruck ist bevorzugt der Druck des Arbeitsgases zu Beginn des Pipettiervorgangs. Ist der Pipettierkanal vor einem Aspirationsvorgang ausschließlich mit Arbeitsgas gefüllt, ist der Arbeitsgas-Referenzdruck vorzugsweise der Umgebungsdruck der Pipettiervorrichtung, da dann das Arbeitsgas im Pipettierkanal mit dem Gas der umgebenden Atmosphäre über die Pipettieröffnung in druckausgleichender Kommunikation steht. Ist zu Beginn eines Aspirationsvorgangs bereits eine Menge an Dosierflüssigkeit im Pipettierkanal aufgenommen, kann der Arbeitsgas-Referenzdruck wiederum der Umgebungsdruck sein oder der Arbeitsgasdruck zu Beginn des Aspirationsvorgangs sein. Gleiches gilt für einen Dispensationsvorgang. Zu Beginn eines Dispensationsvorgangs ist immer eine Menge an Dosierflüssigkeit im Pipettierkanal aufgenommen, von der ausgehend durch die Pipettieröffnung dispensiert wird. Auch hier kann der Arbeitsgas-Referenzdruck der Arbeitsgasdruck zu Beginn des Dispensationsvorgangs sein oder kann der Umgebungsdruck sein.

Mit "Pipettiervorgang" oder "aktueller Pipettiervorgang" ist in der vorliegenden Anmeldung der Pipettiervorgang bezeichnet, dem die Aufnahme oder Abgabe der Soll-Dosierflüssigkeitsmenge als Pipettierergebnis zugeordnet ist.

Das Arbeitsgas-Bezugsvolumen kann das ausschließlich mit Arbeitsgas gefüllte, zwischen Pipettieröffnung und dosierseitiger Kolbenfläche vorhandene Totvolumen des Pipettierkanals bei einer vorbestimmten Position des Pipettierkolbens im Pipettierkanal sein, etwa in einem Bezugszustand, in welchem der Pipettierkolben sich an seinem unteren Totpunkt befindet, der Pipettierkanal bei ausschließlich mit Arbeitsgas gefüllt ist und die Pipettieröffnung frei ist, so dass eine Druckkommunikation des Arbeitsgases mit der Außenumgebung der Pipettiervorrichtung möglich ist. Dieses Totvolumen kann durch Eintauchen der Pipettieröffnung in einen Dosierflüssigkeitsvorrat von der Außenumgebung körperlich abgetrennt werden. Beim Aufsetzen der Pipettieröffnung auf den Flüssigkeitsspiegel eines Dosierflüssigkeitsvorrats wird im dann von der Außenumgebung abgetrennten Arbeitsgas im Pipettierkanal der Umgebungsdruck herrschen.

Das Soll-Dosierflüssigkeitsvolumen ist üblicherweise als Sollwert des Pipettiervorgangs vorgegeben und daher bekannt.

Ein Schritt-Referenzvolumen für einen Pipettierkolben-Bewegungsschritt kann unabhängig von dem zu pipettierenden Soll-Dosierflüssigkeitsvolumen vorgegeben also vorbestimmt sein, etwa unter Berücksichtigung der Konstruktion und Kinematik der Pipettiervorrichtung.

Alternativ kann die Steuervorrichtung ausgehend von dem Soll-Dosierflüssigkeitsvolumen ein Schritt-Referenzvolumen als Basismaß für eine von der dosierseitigen Kolbenfläche zurückzulegende Bewegung für den nachfolgenden Pipettierkolben-Bewegungsschritt ermitteln. Dies kann beispielsweise geschehen durch Verwendung einer in einem Datenspeicher hinterlegten Berechnungsformel, welche nach Maßgabe einer vorbestimmten Anzahl an Pipettierkolben-Bewegungsschritten zur Ausführung des das Soll-Dosierflüssigkeitsvolumen pipettierenden Pipettiervorgangs und weiter nach Maßgabe des während des Pipettiervorgangs zu pipettierenden Soll-Dosierflüssigkeitsvolumens ein Schritt-Referenzvolumen für einen oder für eine Mehrzahl von Pipettierkolben-Bewegungsschritten berechnet. Dies kann alternativ geschehen durch Auslesen von Schritt-Referenzvolumina aus einem vorgegebenen Datenzusammenhang, welcher auf Grundlage einer Anzahl an Pipettierkolben-Bewegungsschritten und des Soll-Dosierflüssigkeitsvolumens als Ausgangsdaten den einzelnen Pipettierkolben-Bewegungsschritten ein Schritt-Referenzvolumen zuordnet.

Das Schritt-Referenzvolumen kann eine fest für eine vorbestimmte Anzahl an Pipettierkolben-Bewegungsschritten vorgegebene Folge von Werten sein. Das Schritt-Referenzvolumen kann alternativ beispielsweise ein Quotient aus dem Soll-Dosierflüssigkeitsvolumen und einer vorbestimmten Anzahl von Pipettierkolben-Bewegungsschritten sein. Die vorbestimmte Anzahl von Pipettierkolben-Bewegungsschritten kann die Gesamtanzahl an Pipettierkolben-Bewegungsschritten des Pipettiervorgangs sein, wenn das Soll-Dosierflüssigkeitsvolumen gleichmäßig auf alle Pipettierkolben-Bewegungsschritte aufgeteilt sein soll.

Bevorzugt ist die Anzahl von Pipettierkolben-Bewegungsschritten, auf die das Soll-Dosierflüssigkeitsvolumen aufgeteilt ist, kleiner als die Gesamtanzahl an Pipettierkolben-Bewegungsschritten des Pipettiervorgangs, sodass der Pipettiervorgang zusätzlich Pipettierkolben-Bewegungsschritte umfasst, in denen der Kolben, verglichen mit den Pipettierkolben-Bewegungsschritte des Soll-Dosierflüssigkeitsvolumens, mit verhältnismäßig kleinen Bewegungsvolumina überwiegend oder ausschließlich zur Korrektur des bereits im Pipettierkanal aufgenommenen Dosierflüssigkeitsvolumens, nicht jedoch zur Aufnahme einer größeren Dosierflüssigkeitsmenge bewegt wird. Die Schritt-Referenzvolumina unterscheiden sich jedoch bevorzugt betragsmäßig über die einzelnen Pipettierkolben-Bewegungsschritte des Pipettiervorgangs hinweg, um bisher gewonnene Erkenntnisse und Erfahrungen über das Pipettieren von Flüssigkeiten berücksichtigen zu können. So ist beispielsweise beim Pipettieren, insbesondere beim Aspirieren, ein inkrementelles Schritt-Referenzvolumen für näher am Beginn des Pipettiervorgangs gelegene Pipettierkolben-Bewegungsschritte betragsmäßig bevorzugt größer als für näher am Ende des Pipettiervorgangs gelegene Pipettierkolben-Bewegungsschritte. So kann ein Überschieß- oder/und Nachfließverhalten von Dosierflüssigkeit beim Pipettieren, insbesondere beim Aspirieren, berücksichtigt werden.

Das vorbestimmte oder wie oben beschrieben bestimmbare Schritt-Referenzvolumen dient als Basis-Bewegungsschrittweite des Pipettierkolbens längs der Kanalbahn für den jeweils folgenden Pipettierkolben-Bewegungsschritt. Ein an der Soll-Dosierflüssigkeitsmenge ausgerichtetes Schritt-Referenzvolumen und ein demselben Pipettierkolben-Bewegungsschritt zugeordnetes Soll-Schritt-Bewegungsvolumen werden sich betragsmäßig weniger stark unterscheiden als ein unabhängig von der Soll-Dosierflüssigkeitsmenge vorbestimmtes Schritt-Referenzvolumen desselben Pipettierkolben-Bewegungsschritts und das zugeordnete Soll-Schritt-Bewegungsvolumen. Dies spielt für den Pipettiererfolg jedoch keine bedeutende Rolle, da es im Grunde keine Rolle spielt, welcher Anteil des ermittelten Soll-Schritt-Bewegungsvolumens eines Pipettierkolben-Bewegungsschritts auf dem Schritt-Referenzvolumen und welcher Anteil auf einem das Schritt-Referenzvolumen zu einem Soll-Schritt-Bewegungsvolumen ergänzenden Schritt-Korrekturbewegungsvolumen beruht.

Da die vorliegend diskutierte flüssigkeitsklassen-unabhängige Steuerung bzw. Regelung eines Pipettiervorgangs wegen des mit dem Pipettierkolben wechselwirkenden Arbeitsgases im Pipettierkanal nicht auf die Dosierflüssigkeit, sondern auf das Arbeitsgas fokussiert und somit bevorzugt auf der das Verhalten des Arbeitsgases sehr gut vorhersagenden idealen Gasgleichung beruht, sind Bewegungsweiten des Pipettierkolbens in der vorliegenden Anmeldung als Volumina angegeben. Volumina lassen sich unmittelbar mit der idealen Gasgleichung verarbeiten. Anhand der durch die jeweilige Konstruktion bekannten Größe der dosierseitigen Kolbenfläche kann ein Schrittvolumen ohne weiteres in eine Pipettierkolben-Schrittweite längs der Kanalbahn umgerechnet und der Pipettierkolben zu einer entsprechenden Bewegung angesteuert werden.

Die Steuervorrichtung kann eine elektronische Datenverarbeitungsvorrichtung sein, etwa umfassend wenigstens einen integrierten Schaltkreis. Bevorzugt weist die Steuervorrichtung einen Datenspeicher auf, in welchem ein Betriebsprogramm und Betriebsdaten gespeichert sind, auf deren Grundlage die elektronische Datenverarbeitungsvorrichtung Steuerbefehle an die Antriebsvorrichtung ausgibt.

Das Arbeitsgas kann ein beliebiges Arbeitsgas sein. In vielen Anwendungsfällen wird es einfach Luft sein. Es kann jedoch auch, etwa wenn die zu verarbeitende Dosierflüssigkeit dies erfordert, ein Edelgas sein, wie etwa Helium oder Argon, oder ein quasiinertes Gas, wie etwa Stickstoff oder Kohlendioxid.

Das bisherige Verlagerungsvolumen der dosierseitigen Kolbenfläche im aktuellen Pipettiervorgang bis zu dem folgenden Pipettierkolben-Bewegungsschritt ist das von der dosierseitigen Kolbenfläche im Verlauf des aktuellen Pipettiervorgangs durch Verlagerung längs der Kanalbahn überstrichene Volumen. Dieses Verlagerungsvolumen berücksichtigt bisher im Pipettiervorgang erfolgte Pipettierhandlungen. Es ist somit ein Maß für die im aktuellen Pipettiervorgang bis zum nachfolgenden Pipettierkolben-Bewegungsschritt geleistete Pipettierarbeit.

Mit den bisherigen Bewegungen des Pipettierkolbens wurde die im Pipettierkanal vorhandene Menge an Arbeitsgas manipuliert. Die Arbeitsgasmenge wurde verlagert oder/und in seinem Volumen verändert, also etwa beim Aspirieren expandiert und beim Dispensieren komprimiert. Die oben genannten Korrekturgrößen: erste Korrekturgröße und zweite Korrekturgröße, können herangezogen werden, um die Auswirkungen der bisherigen Pipettierkolbenbewegung im Pipettiervorgang auf das Arbeitsgas möglichst genau zu bestimmen. In der Folge ist es dann möglich, die durch das manipulierte Arbeitsgas im Pipettierkanal vorhandene Dosierflüssigkeitsmenge möglichst genau zu bestimmen.

Durch schrittweise Ausführung der Pipettierkolben-Bewegung und Ermittlung eines Soll-Schritt-Bewegungsvolumens für jeden nachfolgenden Pipettierkolben-Bewegungsschritt unter Einbeziehung der oben genannten Parameter kann so das mit dem Pipettiervorgang zu pipettierende Soll-Dosierflüssigkeitsvolumen mit hoher Genauigkeit pipettiert werden.

Der Einfachheit halber ist der Pipettierkanal in zwei Arbeitsbereiche aufgeteilt betrachtet. Es soll grundsätzlich nicht ausgeschlossen werden, dass noch weitere Arbeitsbereiche definiert werden, jedoch genügen bereits zwei Arbeitsbereiche für ein hochgenaues Pipettierergebnis. Die Arbeitsbereiche unterscheiden sich durch die in ihnen herrschenden Temperaturen, wobei hier die Temperaturen des Arbeitsgases maßgeblich sind. Für den ersten Arbeitsbereich, dessen Arbeitsgasanteil in dem niedrigeren Basistemperaturbereich gelegen ist, berücksichtigt die erste Korrekturgröße nur eine druckänderungsinduzierte Volumenänderung. Für den zweiten Arbeitsbereich, dessen Arbeitsgasanteil in dem höheren Arbeitstemperaturbereich gelegen ist, berücksichtigt die zweite Korrekturgröße eine Volumenänderung sowohl aufgrund einer Druckänderung als auch aufgrund einer Temperaturänderung eines Arbeitsgasanteils.

Die Druckänderung als Ursache der Volumenänderung ist durch die bisherige Bewegung des Pipettierkolbens bewirkt. Durch diese Bewegung des Pipettierkolbens seit Beginn des Pipettiervorgangs wurde der Druck des Arbeitsgases vom ursprünglichen Arbeitsgasdruck, insbesondere Arbeitsgas-Referenzdruck, auf den aktuell herrschenden Arbeitsgasdruck verändert. Diese Druckänderung wiederum ist Ursache für eine Änderung der Menge an Dosierflüssigkeit im Pipettierkanal, denn neben anderen physikalischen Effekten, wie etwa Reibung, ist der im Pipettierkanal herrschende Druck des Arbeitsgases maßgeblich dafür, dass im Pipettierkanal eine gewisse Dosierflüssigkeitsmenge gehalten wird. Der Unterschied zwischen dem aktuellen Arbeitsgasdruck und dem Arbeitsgasdruck, insbesondere Arbeitsgas-Referenzdruck, zu Beginn des Pipettiervorgangs ist daher ein Maß für die Veränderung der im Pipettierkanal aufgenommenen Dosierflüssigkeitsmenge. Mit der Veränderung des Arbeitsgasdrucks während des Pipettiervorgangs hat sich jedoch auch das Volumen der im Pipettierkanal eingeschlossenen Arbeitsgasmenge vom anfänglichen Arbeitsgasvolumen auf ein verändertes Arbeitsgasvolumen geändert. Diese Volumenänderung ist für jeden nachfolgenden Pipettierkolben-Bewegungsschritt zu berücksichtigen, wenn die nach einem vorhergehenden Pipettierkolben-Bewegungsschritt im Pipettierkolben vorhandene Dosierflüssigkeitsmenge ermittelt werden soll.

Der erste Arbeitsbereich ist ein Bereich, welcher verhältnismäßig gleichmäßigen äußeren Bedingungen unterliegt. Der erste Arbeitsbereich ist erfindungsgemäß in einer Umgebungsatmosphäre mit im Wesentlichen konstanter Umgebungstemperatur angeordnet. So umfasst der erste Arbeitsbereich bevorzugt eine mit der übrigen Pipettiervorrichtung lösbar koppelbare Pipettierspitze sowie gegebenenfalls einen zur Umgebungsatmosphäre freiliegenden vorrichtungsfesten Abschnitt des Pipettierkanals. Von diesen Abschnitten kann ohne großen Fehler angenommen werden, dass sie sich dauerhaft auf dem konstanten Temperaturniveau der Umgebungsatmosphäre befinden.

Der zweite Arbeitsbereich des Pipettierkanals ist ein Abschnitt des Pipettierkanals, welcher im Gegensatz zum ersten Arbeitsbereich nicht unmittelbar der Umgebungsatmosphäre ausgesetzt ist oder/und dessen Temperatur nicht maßgeblich durch die Umgebungsatmosphäre beeinflusst ist. Für diesen zweiten Arbeitsbereich wird nicht nur die Volumenänderung des Arbeitsgases korrigiert, welche durch eine von der Kolbenbewegung verursachte Druckänderung bewirkt ist, sondern auch eine Volumenänderung des Arbeitsgases, welche durch eine Temperaturänderung zwischen der Basistemperatur und der Arbeitstemperatur bewirkt ist.

Durch Ermittlung der Korrekturwerte und durch deren Anwendung vor jedem Pipettierkolben-Bewegungsschritt fällt zum einen die bei jedem Bewegungsschritt anfallende Korrektur betragsmäßig geringer aus als wenn eine Korrektur einmalig für den gesamten Pipettiervorgang ermittelt würde. Zum anderen wird durch die Korrektur des Schritt-Referenzvolumens zum Soll-Schritt-Bewegungsvolumen vor jedem Pipettierkolben-Bewegungsschritt eine hinsichtlich der Pipettiermenge hochgenaue Pipettierung erhalten.

Wenn vorliegend ausgesagt ist, dass die Positionserfassungsvorrichtung eine Position des Pipettierkolbens längs der Kanalachse erfasst, so umfasst dies eine unmittelbare Erfassung der Pipettierkolbenposition ebenso wie eine mittelbare Erfassung derselben, solange das Erfassungsergebnis die Pipettierkolbenposition repräsentiert. Denn dann ist das Ziel erreicht, dass die Positionserfassungsvorrichtung ein die Position des Pipettierkolbens repräsentierendes Positionserfassungssignal ausgeben kann. Entsprechendes gilt mutatis mutandis für die Erfassung des Drucks des Arbeitsgases im Pipettierkanal durch die Druckerfassungsvorrichtung. Auch der Arbeitsgasdruck kann unmittelbar oder mittelbar erfasst werden, solange das Erfassungsergebnis den Arbeitsgasdruck im Pipettierkanal repräsentiert.

Die vorliegende Erfindung geht aus von einer Betrachtung des Pipettierkanalvolumens zwischen Pipettieröffnung und dosierseitiger Kolbenfläche. Das gesamte zwischen Pipettieröffnung und dosierseitige Kolbenfläche vorhandene Volumen ist entweder mit Arbeitsgas oder mit Arbeitsgas und Dosierflüssigkeit gefüllt. Die vorliegende Erfindung sei nachfolgend am Beispiel des, verglichen mit einem Dispensationsvorgang, schwieriger hochgenau zu regelnden Aspirationsvorgangs erläutert. Außerdem wird in der Regel der Anfangszustand eines Dispensationsvorgangs durch Aspiration erzeugt, so dass ein Aspirationsvorgang als am Anfang eines jeden Pipettiervorgangs stehend betrachtet werden kann.

Zu Beginn des Aspirationsvorgangs befindet sich bei bekannter Position der dosierseitigen Kolbenfläche - was einer bekannten Position des Pipettierkolbens gleichwertig ist - im Pipettierkanal zwischen der Pipettieröffnung und der dosierseitigen Kolbenfläche ausschließlich Arbeitsgas, dessen Volumen als Arbeitsgas-Totvolumen $V_T$ bezeichnet wird. Taucht man nun die Pipettieröffnung in einen externen Dosierflüssigkeitsvorrat geringfügig ein, sodass das Totvolumen $V_T$ von der Außenumgebung getrennt wird, jedoch keine Dosierflüssigkeit kapillar durch die Pipettieröffnung in den Pipettierkanal eindringt, ist es sinnvoll, das nun von der Umgebung abgetrennte Arbeitsgas-Totvolumen $V_T$ als Arbeitsgas-Bezugsvolumen zu verwenden. Der Druck des Arbeitsgases zu diesem Zeitpunkt sei der Arbeitsgas-Referenzdruck, welcher folglich der Umgebungsdruck $p_\infty$ ist. Die Temperatur des Arbeitsgases ist die Umgebungstemperatur $T_\infty$.

Zunächst soll die Unterteilung des Pipettierkanals in zwei unterschiedlich temperierte Arbeitsbereiche vernachlässigt werden, um das hinter der vorliegenden Erfindung liegende Grundprinzip zu erläutern. Die Menge an zwischen Dosierflüssigkeit und dosierseitiger Kolbenfläche eingeschlossenem Arbeitsgas bleibt für den weiteren Pipettiervorgang unter Vernachlässigung von Verdampfungsvorgängen im und von Leckagevorgängen am Pipettierkanal konstant. Das Volumen der eingeschlossenen Arbeitsgasmenge bleibt dagegen nicht konstant.

Wird in dem eingetauchten Zustand die dosierseitige Kolbenfläche um ein Verlagerungsvolumen $V_{Kolben}$ von der Pipettieröffnung weg bewegt, strömt aufgrund des so erzeugten Unterdrucks bezüglich des ursprünglich herrschenden Umgebungsdrucks ein Volumen $V_{liquid}$ an Dosierflüssigkeit aus dem Vorrat durch die Pipettieröffnung in den Pipettierkanal ein. Die Kenntnis des aufgenommenen Volumens $V_{liquid}$ an Dosierflüssigkeit ist für einen hochgenauen Aspirationsvorgang von großer Wichtigkeit. Im Pipettierkanal herrscht dann ein vom Arbeitsgas-Referenzdruck verschiedener Arbeitsgasdruck $p_1$, bei einer von der Anfangstemperatur verschiedenen Arbeitsgastemperatur von $T_1$. Das ursprüngliche Arbeitsgas-Totvolumen $V_T$ wurde also zunächst um $V_{Kolben}$ vergrößert und dann um das einströmende Dosierflüssigkeitsvolumen $V_{liquid}$ verkleinert. Das nach der Pipettierkolbenbewegung im Pipettierkanal vorhandene Arbeitsgasvolumen $V_1$ ergibt sich folglich zu:

$$V_1 = V_T + V_{Kolben} - V_{liquid} \qquad \text{Gl. 1}$$

Aus der idealen Gasgleichung $p \cdot V = m \cdot R \cdot T$ oder $\frac{p \cdot V}{T} = const$ . ergibt sich aus den oben geschilderten Anfangsbedingungen:

$$\frac{p_\infty \cdot V_T}{T_\infty} = \frac{p_1 \cdot V_1}{T_1} \qquad \text{Gl. 2}$$

Mit Gleichungen 1 und 2 ergibt sich für die unbekannte Größe Volumen $V_{liquid}$:

$$V_{liquid} = V_{Kolben} + V_T \cdot \left(1 - \frac{T_1}{T_\infty} \cdot \frac{p_\infty}{p_1}\right) \qquad \text{Gl. 3}$$

Die durch eine Bewegung des Pipettierkolbens um das Volumen $V_{Kolben}$ aufgenommene Menge an Dosierflüssigkeit $V_{liquid}$ ist also bei bekanntem $V_T$ ermittelbar, wenn $p_\infty$ und $p_1$ durch die Druckerfassungsvorrichtung erfassbar sind, wenn $T_\infty$ und $T_1$ durch eine Temperaturerfassungsvorrichtung erfassbar sind oder wenn $T_\infty$ und $T_1$ bekannt sind und wenn $V_{Kolben}$ durch die Positionserfassungsvorrichtung erfassbar ist.

Allerdings tritt vorliegend eine Komplikation durch die unterschiedlich temperierten Arbeitsbereiche des Pipettierkanals auf. Üblicherweise liegt der erste Arbeitsbereich näher bei der Pipettieröffnung, während der zweite Arbeitsbereich näher bei der dosierseitigen Kolbenfläche liegt. Gemäß der vorliegenden Erfindung beginnt der erste Arbeitsbereich an der Pipettieröffnung und reicht von dieser in den Pipettierkanal hinein, während der zweite Arbeitsbereich längs einer Wärmequelle der Pipettiervorrichtung existiert. Befindet sich die dosierseitige Kolbenfläche im zweiten Arbeitsbereich, dann sind zwischen Pipettieröffnung und dosierseitiger Kolbenfläche, abhängig von der konstruktiven Ausgestaltung der Pipettiervorrichtung, der erste und der zweite Arbeitsbereich vorzugsweise einander benachbart und grenzen aneinander an. Das oben bezeichnete im Pipettierkanal eingeschlossene Arbeitsgasvolumen $V_1$ setzt sich dann zusammen aus einem Volumenanteil $_{AB1}V_1$ des ersten Arbeitsbereichs und einem Volumenanteil $_{AB2}V_1$ des zweiten Arbeitsbereichs.

$$V_1 = {_{AB1}}V_1 + {_{AB2}}V_1 \qquad \text{Gl. 4}$$

Grundsätzlich sind in der vorliegenden Anmeldung Werte, die dem ersten Arbeitsbereich zugeordnet sind, mit "AB1" indiziert, und Werte, die dem zweiten Arbeitsbereich zugeordnet sind, mit "AB2".

Gleichung 4 kann bereits für das ursprüngliche Arbeitsgas-Totvolumen $V_T$ gelten (s. nachfolgende Gleichung 4'), falls sich schon das ursprüngliche Arbeitsgas-Totvolumen $V_T$ in beide Arbeitsbereiche hinein erstreckt:

$$V_T = {_{AB1}}V_T + {_{AB2}}V_T \qquad \text{Gl. 4'}$$

Alternativ kann das zwischen Dosierflüssigkeit und dosierseitiger Kolbenfläche eingeschlossene Arbeitsgasvolumen erst mit der Pipettierkolbenbewegung während des Pipettiervorgangs so verlagert werden, dass es sich nach einem Verlagerungsvorgang in beiden Arbeitsbereichen erstreckt. Wenn sich das ursprüngliche Arbeitsgas-Totvolumen $V_T$ zunächst nur in einem Arbeitsbereich erstreckt, ist dies in der Regel der erste Arbeitsbereich.

Bevorzugt geht man vereinfachend von der Annahme aus, der erste Arbeitsbereich befinde sich konstant auf einem ersten Temperaturniveau, beispielhaft angegeben durch die Umgebungstemperatur $T_\infty$. Es kann jedoch auch jede andere Temperatur $T_{AB1}$ sein. Aus den oben genannten Gründen ist jedoch die Annahme der Umgebungstemperatur als konstanter Temperatur des ersten Arbeitsbereichs sinnvoll. Dosierflüssigkeit wird daher in der Regel nur in den ersten Arbeitsbereich aspiriert, sodass die aspirierte Dosierflüssigkeit möglichst nicht erwärmt wird oder, besonders bevorzugt, im Pipettierkanal keine Temperaturänderung erfährt.

Geht man von dem bevorzugten Fall aus, dass sich die dosierseitige Kolbenfläche zu Beginn des oben beispielhaft beschriebenen Aspirationsvorgangs an ihrem unteren Totpunkt oder nahe desselben befindet, sodass ein möglichst großer Kolbenhub für die Aufnahme von Dosierflüssigkeit zur Verfügung steht, dann kann sich das vom Pipettierkolben während des Aspirationsvorgangs oder während eines Teilschritts desselben überstrichene Volumen $V_{Kolben}$ im ersten oder/und im zweiten Arbeitsbereich befinden. Es gilt daher ganz allgemein:

$$V_{Kolben} = {}_{AB1}V_{Kolben} + {}_{AB2}V_{Kolben} \qquad \text{Gl. 5}$$

$_{AB1}V_{Kolben}$ kann 0 sein, dann liegt die gesamte Kolbenbewegung im zweiten Arbeitsbereich. Wenn $_{AB1}V_{Kolben}$ nicht 0 ist, dann muss anfänglich $_{AB2}V_T = 0$ gelten, denn dann wird das anfängliche Arbeitsgas-Totvolumen $V_T$ durch die Kolbenbewegung zunächst nur innerhalb des ersten Arbeitsbereichs längs der Kanalbahn verlagert, aber es werden keine Arbeitsgasanteile zwischen dem ersten und dem zweiten Arbeitsbereich verschoben.

Näherungsweise kann also davon ausgegangen werden, dass bei einer Kolbenbewegung Arbeitsgas im ersten Arbeitsbereich isotherm expandiert oder komprimiert wird. Dies gilt auch für den im ersten Arbeitsbereich gelegenen Anteil $_{AB1}V_{Kolben}$ des von der dosierseitigen Kolbenfläche überstrichenen Volumens.

Solange sich während eines Pipettiervorgangs das gesamte zwischen Dosierflüssigkeit und dosierseitiger Kolbenfläche eingeschlossene Arbeitsgasvolumen nur im ersten Arbeitsbereich befindet, ist die Steuerung oder Regelung des Pipettiervorgangs unproblematisch, da die Veränderungen am Arbeitsgas dann als isotherme Zustandsänderungen betrachtet und behandelt werden. Die vorliegende Erfindung kommt dann zum Tragen, wenn die dosierseitige Kolbenfläche sich im zweiten Arbeitsbereich bewegt oder beginnt, sich in diesen hineinzubewegen.

Ein Volumen $_{AB2}V_{Kolben}$ an Arbeitsgas, welches dem im zweiten Arbeitsbereich gelegenen Volumenanteil der Kolbenbewegung entspricht, wird dagegen zwischen dem ersten und dem zweiten Arbeitsbereich verschoben. Beim Aspirieren erfolgt die Verschiebung vom ersten in den zweiten Arbeitsbereich und beim Dispensieren in umgekehrter Richtung. Im zweiten Arbeitsbereich betrage die Temperatur des Arbeitsgases $T_{AB2}$, mit $T_{AB2} > T_\infty$. Mit der Verschiebung von Arbeitsgas zwischen dem ersten und dem zweiten Arbeitsbereich findet eine Temperaturänderung am Arbeitsgas statt.

Bei isothermer und isobarer Kolbenbewegung würde das von der dosierseitigen Kolbenfläche überstrichene Volumen im Pipettierkanal der Änderung der Menge an Dosierflüssigkeit im Pipettierkanal entsprechen, denn wo im Pipettierkanal kein Arbeitsgas ist, muss Dosierflüssigkeit sein.

Die Kolbenbewegung kann jedoch keine isobare Zustandsänderung des Arbeitsgases bewirken, da nur eine Druckänderung im Arbeitsgas Arbeit an der Dosierflüssigkeit verrichten kann und diese durch die Pipettieröffnung hindurch verlagern kann.

Wegen der Verlagerung von Arbeitsgas zwischen dem ersten und dem wärmeren zweiten Arbeitsbereich kann die durch die Kolbenbewegung bewirkte Zustandsänderung des Arbeitsgases auch nicht isotherm sein.

Aufgrund der obigen Annahmen verschiebt der im zweiten Arbeitsbereich gelegene Anteil der Kolbenbewegung das Arbeitsgasvolumen $_{AB2}V_{Kolben}$ zwischen dem ersten und dem zweiten Arbeitsbereich. Damit ändert sich die Temperatur des Arbeitsgasvolumens $_{AB2}V_{Kolben}$ beim Aspirieren von $T_\infty$ nach $T_{AB2}$ und beim Dispensieren von $T_{AB2}$ nach $T_\infty$. Zusätzlich unterliegt dieses Arbeitsgasvolumen einer durch die Kolbenbewegung bewirkten Druckänderung.

Der im ersten Arbeitsbereich gelegene Anteil der Kolbenbewegung bewirkt nur eine Veränderung des Drucks des Arbeitsgasvolumens $_{AB1}V_{Kolben}$. Dabei ändert sich das dem von der dosierseitigen Kolbenfläche insgesamt überstrichenen Volumen entsprechende Arbeitsgasvolumen $V_{Kolben}$ aufgrund von Druckänderung und Temperaturänderung um nachfolgenden Betrag:

$$\Delta V_{Kolben} = {}_{AB2}V_{Kolben} \cdot \left( \frac{T_{AB2}}{T_\infty} \cdot \frac{p_\infty}{p_{AB2}} - 1 \right) + {}_{AB1}V_{Kolben} \cdot \left( \frac{p_\infty}{p_{AB1}} - 1 \right) \qquad \text{Gl. 6}$$

Der sich von der Pipettieröffnung des Pipettierkanals bis zu einer durch konstruktive Ausgestaltung der Pipettieröffnung erstreckende erste Arbeitsbereich habe im Pipettierkanal das Volumen $V_{AB1}$. Unter der vereinfachenden Annahme, dass das durch die Kolbenbewegung bewirkte Volumen $V_{liquid}$ an im Pipettierkanal aufgenommener Dosierflüssigkeit dem von der dosierseitigen Kolbenfläche überstrichenen Volumen $V_{Kolben}$ zunächst entspricht, verbleibt im ersten Arbeitsbereich dann, wenn sich die dosierseitige Kolbenfläche im zweiten Arbeitsbereich befindet, ein systemisches Restvolumen an Arbeitsgas $_{AB1}V_{sys,rest}$, für welches gilt:

$$_{AB1}V_{sys,rest} \equiv V_{AB1} - V_{liquid} \approx V_{AB1} - V_{Kolben} \qquad \text{Gl. 7}$$

$V_T$ kann dann, wenn die dosierseitige Kolbenfläche anfänglich, also zu Beginn des Pipettiervorgangs, im zweiten Arbeitsbereich liegt, um ein im zweiten Arbeitsbereich gelegenes Anfangsvolumen $_{AB2}V_{init}$ größer sein als $V_{AB1}$. Dann, wenn $V_T$ kleiner ist als $V_{AB1}$, muss die dosierseitige Kolbenfläche erst um $_{AB1}V_{Kolben}$ bis zur Grenze zwischen dem ersten und dem zweiten Arbeitsbereich verschoben werden. Die allgemeinste Fassung von Gleichung 7 lautet unter Berücksichtigung von Gleichung 5 daher:

$$_{AB1}V_{sys,rest} \approx V_T - {}_{AB2}V_{init} + {}_{AB1}V_{Kolben} - \left( {}_{AB1}V_{Kolben} + {}_{AB2}V_{Kolben} \right)$$

$$= V_T - {}_{AB2}V_{init} - {}_{AB2}V_{Kolben} \qquad\qquad \text{Gl. 7*}$$

Zwar kann nur entweder $_{AB2}V_{init}$ oder $_{AB1}V_{Kolben}$ von 0 verschieden sein. Da sich $_{AB1}V_{Kolben}$ aus der Gleichung stets heraussubtrahiert, kommt es auf $_{AB1}V_{Kolben}$ nicht an. Dann, wenn, wie es bevorzugt ist, $V_{AB1} \geq V_T$ und folgerichtig $_{AB2}V_{init} = 0$ gilt, etwa weil der erste Arbeitsbereich ausgehend von der Pipettieröffnung über einen unteren Totpunkt oder eine sonstige Anfangsposition der dosierseitigen Kolbenfläche hinausreicht, lässt sich Gleichung 7* vereinfacht schreiben als:

$$_{AB1}V_{sys,rest} \approx V_T + {}_{AB1}V_{Kolben} - \left( {}_{AB1}V_{Kolben} + {}_{AB2}V_{Kolben} \right) = V_T - {}_{AB2}V_{Kolben} \qquad \text{Gl. 7'}$$

Da das systemische Restvolumen definitionsgemäß nur im ersten Arbeitsbereich existiert, wird der Index "AB1" nachfolgend bei der Bezeichnung des systemischen Restvolumens weggelassen. Da sich folglich das systemische Restvolumen $V_{sys,rest}$ im angegebenen Betriebszustand der Pipettiervorrichtung von dem dem Arbeitsgas zugewandten Meniskus der Dosierflüssigkeit am oder im Pipettierkanal bis zu der von der Pipettieröffnung fernliegenden Grenze des ersten Arbeitsbereichs erstreckt, enthält das systemische Restvolumen auch den etwaigen im ersten Arbeitsbereich gelegenen Anteil des während der Kolbenbewegung von der dosierseitigen Kolbenfläche überstrichenen Volumens $_{AB1}V_{Kolben}$. Das systemische Restvolumen $V_{sys,rest}$ erfährt gemäß obiger Annahmen durch die Kolbenbewegung eine isotherme Zustandsänderung, wodurch sich das systemische Restvolumen $V_{sys,rest}$ um nachfolgenden Betrag $\Delta V_{sys,rest}$ ändert:

$$\Delta V_{sys,rest} = V_{sys,rest} \cdot \left( \frac{p_\infty}{p_{AB1}} - 1 \right) \qquad\qquad \text{Gl. 8}$$

Die Gleichungen 7* und 7' zeigen unmittelbar, dass das im ersten Arbeitsbereich von der dosierseitigen Kolbenfläche überstrichene Volumen in dem systemischen Restvolumen bereits berücksichtigt ist. Mit der Berücksichtigung des im ersten Arbeitsbereichs gelegenen Anteils der Kolbenbewegung und seiner ausschließlich druckänderungsinduzierten Änderung im systemischen Restvolumen und weiter unter der sinnvollen Annahme, dass in beiden Arbeitsbereichen der gleiche Arbeitsgasdruck $p_{AB2} = p_{AB1}$ herrscht, da beide Arbeitsbereiche miteinander Druck ausgleichend kommunizieren können, verbleibt aus Gleichung 6 nur der im zweiten Arbeitsbereich gelegene Anteil der Kolbenbewegung. Dies führt aus Gleichung 6 und Gleichung 8 zu nachfolgender Gleichung 9:

$$_{AB2}\Delta V_{Kolben} = {}_{AB2}V_{Kolben} \cdot \left( \frac{T_{AB2}}{T_\infty} \cdot \frac{p_\infty}{p_{AB1}} - 1 \right) \qquad\qquad \text{Gl. 9}$$

Um die Volumenänderungen der Gleichungen 8 und 9 differiert das im Pipettierkanal aufgenommene Volumen an Dosierflüssigkeit vom Volumen der die Aufnahme der Dosierflüssigkeit im Pipettierkanal bewirkenden Kolbenbewegung. Formelhaft ausgedrückt bedeutet dies:

$$V_{liquid} = V_{Kolben} - {}_{AB2}\Delta V_{Kolben} - \Delta V_{sys,rest} \qquad\qquad \text{Gl. 10}$$

Mit den Gleichungen 6, 7 und 8 lässt sich Gleichung 9 auch schreiben als:

$$V_{liquid} = V_{Kolben} - {}_{AB2}V_{Kolben} \cdot \left( \frac{T_{AB2}}{T_\infty} \cdot \frac{p_\infty}{p_{AB1}} - 1 \right) - \left( V_T - {}_{AB2}V_{Kolben} \right) \cdot \left( \frac{p_\infty}{p_{AB1}} - 1 \right) \quad \text{Gl. 10'}$$

In anderer Gruppierung ergibt sich aus Gleichung 10' nachfolgende Gleichung 10":

$$V_{liquid} = V_{Kolben} - {}_{AB2}V_{Kolben} \cdot \frac{p_\infty}{p_{AB1}} \cdot \left( \frac{T_{AB2}}{T_\infty} - 1 \right) - V_T \cdot \left( \frac{p_\infty}{p_{AB1}} - 1 \right) \qquad \text{Gl. 10"}$$

Das Volumen $V_T$ ist eine rein konstruktive Größe der Pipettiervorrichtung und folglich bekannt. In Kenntnis der im zweiten Arbeitsbereich herrschenden Temperatur $T_{AB2}$, in Kenntnis des durch die Positionserfassungsvorrichtung ermittelbaren, von der dosierseitigen Kolbenfläche überstrichenen Volumens $V_{Kolben}$ sowie seines Anteils $_{AB2}V_{Kolben}$ im zweiten Arbeitsbereich, in Kenntnis des von der Druckerfassungsvorrichtung ermittelbaren Drucks $p_{AB1}$ des Arbeitsgases im Pipettierkanal sowie in Kenntnis der Anfangsparameter $p_\infty$, $T_\infty$, kann durch eine der Gleichungen 10", 10' oder 10 das im Pipettierkanal aufgenommene Volumen an Dosierflüssigkeit für jeden Pipettierkolben-Bewegungsschritt unabhängig von den Pipettiereigenschaften der Dosierflüssigkeit näherungsweise ermittelt werden.

Der Temperaturquotient $\frac{T_{AB2}}{T_\infty}$ ist definitionsgemäß stets positiv und größer als 1. Der Druckquotient $\frac{p_\infty}{p_{AB1}}$ ist ebenfalls stets positiv und regelmäßig größer als 1, da der Arbeitsgasdruck im Inneren des Pipettierkanals nicht negativ werden kann und in den allermeisten Fällen kleiner sein muss als der Umgebungsdruck, um die im Pipettierkanal aufgenommene Dosierflüssigkeit im Pipettierkanal halten zu können. Eine Ausnahme kann bei kleinen im Pipettierkanal aufgenommenen Volumina bestimmter Dosierflüssigkeiten auftreten, wenn alleine diese durch Kapillarkräfte im Pipettierkanal gehalten werden können. Dann kann $p_{AB1}$ größer als der Umgebungsdruck $p_\infty$ sein.

In Gleichung 10 ist der Term $\Delta V_{sys,rest}$ ein Beispiel für eine erste Korrekturgröße im Sinne der vorliegenden Anmeldung und ist der Term $_{AB2}\Delta V_{Kolben}$ eine zweite Korrekturgröße im Sinne der vorliegenden Anmeldung.

In Gl. 10' ist der Term $\left(V_T - _{AB2}V_{Kolben}\right) \cdot \left(\frac{p_\infty}{p_{AB1}} - 1\right)$ ein Beispiel für eine erste Korrekturgröße im Sinne der vorliegenden Anmeldung und ist der Term $_{AB2}V_{Kolben} \cdot \left(\frac{T_{AB2}}{T_\infty} \cdot \frac{p_\infty}{p_{AB1}} - 1\right)$ ein Beispiel für eine zweite Korrekturgröße im Sinne der vorliegenden Anmeldung.

In Gl. 10" ist der Term $V_T \cdot \left(\frac{p_\infty}{p_{AB1}} - 1\right)$ ein Beispiel für eine erste Korrekturgröße im Sinne der vorliegenden Anmeldung und ist der Term $_{AB2}V_{Kolben} \cdot \frac{p_\infty}{p_{AB1}} \cdot \left(\frac{T_{AB2}}{T_\infty} - 1\right)$ ein Beispiel für eine zweite Korrekturgröße im Sinne der vorliegenden Anmeldung.

In den Gleichungen 10, 10' und 10" ist $V_{Kolben}$ ein Maß für das bisherige Verlagerungsvolumen der dosierseitigen Kolbenfläche im aktuellen Pipettiervorgang. Alle Gleichungen 10, 10' und 10" führen für denselben Zustand der Pipettiervorrichtung zum selben Wert für $V_{liquid}$.

Am Ende des Pipettiervorgangs bildet $V_{liquid}$ die Soll-Dosierflüssigkeitsmenge hochgenau ab. Bei Aspirationsvorgängen, die vom oben definierten Bezugszustand der Pipettiervorrichtung ausgehen, ist $V_{liquid}$ am Ende des Pipettiervorgangs die der Soll-Dosierflüssigkeitsmenge hochgenau entsprechende pipettierte Dosierflüssigkeitsmenge. Bei Pipettiervorgängen, die ausgehend von einer Anfangsmenge $_{Start}V_{liquid}$ an Dosierflüssigkeit im Pipettierkanal beginnen, ist die der Soll-Dosierflüssigkeitsmenge hochgenau entsprechende pipettierte Dosierflüssigkeitsmenge am Ende des Pipettiervorgangs die Differenz zwischen Anfangs- und Endbestand an Dosierflüssigkeit im Pipettierkanal, also $V_{liquid}$ - $_{Start}V_{liquid}$. Da aber ein solcher "vorgefüllter" Anfangszustand des Pipettierkanals selbst wieder auf einem Aspirationsvorgang mit ursprünglich nur mit Arbeitsgas gefülltem Pipettierkanal zurückgehen muss, lässt sich der "vorgefüllte" Betriebszustand ebenfalls durch obige Darstellung eines Aspirationsvorgangs herleiten. Entsprechendes gilt für einen Dispensationsvorgang, dessen Anfangszustand ebenfalls zuvor aspiriert worden sein muss.

Wie oben bereits gezeigt ist, kann die Steuervorrichtung zur Erzielung eines besonders genauen Pipettierergebnisses dazu ausgebildet sein, für den nachfolgenden Pipettierkolben-Bewegungsschritt auf Grundlage des bisherigen Verlagerungsvolumens der dosierseitigen Kolbenfläche des Pipettierkolbens im aktuellen Pipettiervorgang, der ersten Korrekturgröße, und der zweiten Korrekturgröße einen Schätzwert für eine im Aufnahmeraum vorhandene Dosierflüssigkeitsmenge zu bestimmen. Ein solcher Schätzwert kann beispielsweise unter Verwendung wenigstens einer der oben hergeleiteten Gleichungen 10, 10' und 10" bestimmt werden. $V_{liquid}$ - $_{Start}V_{liquid}$ ist dann ein solcher Schätzwert, der es ermöglicht, das im Pipettierkanal pipettierte Volumen an Dosierflüssigkeit als Volumen nach jedem Pipettierkolben-Bewegungsschritt zu bestimmen. Für $_{Start}V_{liquid}$ = 0, also beim Aspirieren von Dosierflüssigkeit ausgehend vom obigen Bezugszustand, ist $V_{liquid}$ selbst der Schätzwert.

Die Steuervorrichtung kann weiter dazu ausgebildet sein, für den folgenden Pipettierkolben-Bewegungsschritt den so bestimmten Schätzwert mit dem Schritt-Referenzvolumen zu vergleichen und auf Grundlage des Vergleichsergebnisses das Soll-Schritt-Bewegungsvolumen zu ermitteln. Beispielsweise kann das Soll-Schritt-Bewegungsvolumen nach Maßgabe des Unterschiedsbetrags zwischen dem Schätzwert und dem Schritt-Referenzvolumen ermittelt werden. Dabei führen bevorzugt größere Unterschiedsbeträge zu größeren Soll-Schritt-Bewegungsvolumina als kleinere Unterschiedsbeträge.

Das Schritt-Bewegungsvolumen wird dabei bevorzugt als kumulatives Schritt-Bewegungsvolumen verwendet, welches die Summe aller einzelnen Schritt-Bewegungsvolumina repräsentiert, die der Pipettierkolben während der vergangenen Bewegungsschritte zurückgelegt hat. Dabei entspricht bevorzugt gemäß der oben gegebenen Erläuterungen das kumulative Schritt-Bewegungsvolumen nach dem Ende des letzten Bewegungsschrittes des Pipettiervorgangs der als Volumen notierten Soll-Dosierflüssigkeitsmenge. Der Vergleich des Schätzwerts mit dem kumulativen Schritt-Bewegungsvolumen entspricht daher einem Vergleich zwischen einem den bisher ausgeführten Bewegungsschritten zugeordneten Soll-Dosierflüssigkeitsvolumen, repräsentiert durch das kumulative Schritt-Bewegungsvolumen, und dem tatsächlich pipettierten Ist-Dosierflüssigkeitsvolumen, repräsentiert durch den Schätzwert.

Der Unterschiedsbetrag kann von der Steuervorrichtung durch ein proportionales oder/und durch ein differentielles oder/und durch ein integrales Umwandlungsglied in ein Schritt-Korrekturbewegungsvolumen umgewandelt werden. Das proportionale Umwandlungsglied ermittelt einen proportionalen Schritt-Korrekturbewegungsvolumenbetrag ausgehend vom Unterschiedsbetrag unter Anwendung eines experimentell oder empirisch zu bestimmenden Proportionalitätsfaktors. Das differentielle Umwandlungsglied ermittelt einen differentiellen Schritt-Korrekturbewegungsvolumenbetrag ausgehend von einer Differenz zwischen dem aktuellen Unterschiedsbetrag und einem früheren Unterschiedsbetrag, also ausgehend von einer Änderung des Unterschiedsbetrags, unter Anwendung eines experimentell oder empirisch zu bestimmenden differentiellen Gewichtungsfaktors. Das integrale Umwandlungsglied ermittelt einen integralen Schritt-Korrekturbewegungsvolumenbetrag ausgehend von einer Summe von Unterschiedsbeträgen unter Einbeziehung des aktuellen Unterschiedsbetrags unter Anwendung eines experimentell oder empirisch zu bestimmenden integralen Gewichtungsfaktors.

Das Soll-Schritt-Bewegungsvolumen des folgenden Pipettierkolben-Bewegungsschritts kann dann das um das Schritt-Korrekturbewegungsvolumen korrigierte, dem folgenden Pipettierkolben-Bewegungsschritt zugeordnete Schritt-Referenzvolumen sein.

Die Steuervorrichtung ist bevorzugt dazu ausgebildet, aufeinander folgende Pipettierkolben-Bewegungsschritte solange auszuführen, bis ein Unterschiedsbetrag zwischen dem bestimmten Schätzwert und dem Schritt-Referenzvolumen einen vorbestimmten Unterschieds-Schwellenwert unterschreitet, insbesondere für eine vorbestimmte Anzahl unmittelbar aufeinander folgender Pipettierkolben-Bewegungsschritte unterschreitet. Dann ist in der Regel die Soll-Dosierflüssigkeitsmenge mit der durch den Unterschieds-Schwellenwert bestimmten Pipettiergenauigkeit pipettiert. Dieses Abbruchkriterium führt vor allem unter der Zusatzbedingung zu hochgenauen Pipettierergebnissen, dass das Schritt-Referenzvolumen ein kumuliertes Schritt-Referenzvolumen ist und der Pipettiervorgang so weit fortgeschritten ist, dass das kumulierte Schritt-Referenzvolumen der Soll-Dosierflüssigkeitsmenge entspricht.

Alternativ kann die Steuervorrichtung dazu ausgebildet sein, eine vorbestimmte Anzahl an aufeinander folgenden Pipettierkolben-Bewegungsschritten auszuführen, die sicher ausreicht, auch zähflüssige Dosierflüssigkeiten mit hoher Oberflächenspannung korrekt zu pipettieren. Im Falle niedrigviskoser Dosierflüssigkeiten kann dies dazu führen, dass substantiell vor Erreichen der vorbestimmten Anzahl an Pipettierkolben-Bewegungsschritten keine nennenswerte Pipettierkolbenbewegung mehr stattfindet, da der Schätzwert schon sehr früh im Wesentlichen der Soll-Dosierflüssigkeitsmenge entspricht.

Zur Erzielung eines hochgenauen Pipettierergebnisses kann die Steuervorrichtung dazu ausgebildet ist, mehr als 100, vorzugsweise mehr als 1000, besonders bevorzugt mehr als 10000 Pipettierkolben-Bewegungsschritte pro Sekunde auszuführen, wobei die Steuervorrichtung dazu ausgebildet ist. Aufgrund der Grenzen der mit Pipettierkolben erreichbaren Dynamik, ist die Steuervorrichtung dazu ausgebildet, weniger als 100000 Pipettierkolben-Bewegungsschritte pro Sekunde auszuführen.

Die Steuervorrichtung kann, wie oben bereits ausführlicher beschrieben ist, das dem nachfolgenden Pipettierkolben-Bewegungsschritt zugeordnete Schritt-Referenzvolumen nach Maßgabe des Soll-Dosierflüssigkeitsvolumens aus einem Datenspeicher auslesen oder/und auf Grundlage des Soll-Dosierflüssigkeitsvolumens berechnen.

Das Schritt-Referenzvolumen kann ein inkrementelles Schritt-Referenzvolumen sein, welches ausgehend vom aktuellen Ort der dosierseitigen Kolbenfläche ein Schritt-Referenzvolumen für einen einzigen nachfolgenden Pipettierkolben-Bewegungsschritt angibt, das die dosierseitige Kolbenfläche während dieses nächsten Bewegungsschrittes zurücklegen soll. Dann weist vorteilhafterweise ein aus den bisherigen inkrementellen Schritt-Referenzvolumina durch Aufsummieren erhaltener kumulierter Wert der Schritt-Referenzvolumina über die ansteigende Anzahl an Schritten einen ersten Schrittbereich auf, in welchem der kumulierte Wert von einem Anfangswert auf einen Betrag von wenigstens 95 %, vorzugsweise auf einen Betrag von genau 100 %, des Soll-Dosierflüssigkeitsvolumens ansteigt, und weist einen auf den ersten Schrittbereich folgenden zweiten Schrittbereich auf, in welchem der kumulierte Wert einen Bereich von 95 % bis 105 %, vorzugsweise einen Wert von genau 100 %, des Soll-Dosierflüssigkeitsvolumens nicht verlässt.

Das Schritt-Referenzvolumen kann alternativ ein absolutes Schritt-Referenzvolumen - oben auch als kumulatives Schritt-Referenzvolumen bezeichnet - sein, das die Endposition der dosierseitigen Kolbenfläche ausgehend von ihrer Anfangsposition zu Beginn des Pipettiervorgangs angibt. Wiederum weist der Wert des absoluten bzw. kumulativen Schritt-Referenzvolumens über die ansteigende Anzahl an Schritten einen ersten Schrittbereich auf, in welchem der Wert des absoluten Schritt-Referenzvolumens von einem Anfangswert auf einen Betrag von wenigstens 95 %, vorzugsweise auf genau 100 % des Soll-Dosierflüssigkeitsvolumens ansteigt, und weist einen auf den ersten Schrittbereich folgenden zweiten Schrittbereich auf, in welchem Wert des absoluten Schritt-Referenzvolumens einen Bereich von 95 % bis 105 %, vorzugsweise von genau 100 %, des Soll-Dosierflüssigkeitsvolumens nicht verlässt.

Vorteilhafterweise ist der Anteil des zweiten Schrittbereichs am gesamten Pipettiervorgang bezüglich der Anzahl an Pipettierkolben-Bewegungsschritten größer als 20 %, bevorzugt größer als 30 %, damit gegen Ende des Pipettiervorgangs eine Beruhigungsphase vorliegt, in welcher der Pipettierkolben hauptsächlich Korrekturbewegungen ausführt, um die Genauigkeit der Übereinstimmung von Soll-Dosierflüssigkeitsmenge und tatsächlich pipettierter Dosierflüssigkeitsmenge zu erhöhen. Die in dieser Phase ausgeführten Pipettierkolben-Bewegungsschritte weisen üblicherweise ein geringeres Soll-Schritt-Bewegungsvolumen auf als im ersten Schrittbereich, was eine weitgehend ungestörte stabile Regelung des Pipettiervorgangs ermöglicht. So ist im zweiten Schrittbereich ein gegenseitiges Aufschaukeln von Störungen im Pipettierablauf und Korrekturen derselben wegen der dann geringen Soll-Schritt-Bewegungsvolumina nahezu ausgeschlossen. Aus dem gleichen Grunde weist bevorzugt der zweite Schrittbereich wenigstens die gleich Anzahl oder sogar eine größere Anzahl an Schritten auf oder/und dauert bevorzugt über wenigstens die gleiche Zeitdauer oder sogar eine längere Zeitdauer fort als der erste Schrittbereich.

Im Zweifelsfall soll der Beginn eines Pipettiervorgangs mit dem Beginn des ersten Schrittbereichs zusammenfallen, also mit dem Zeitpunkt einsetzen, ab welchem ein inkrementelles Schritt-Referenzvolumen betragsmäßig von anfänglich 0 abweicht. Zwar kann es bereits ab dem Eintauchen der Pipettieröffnung in einen Dosierflüssigkeitsvorrat bei der erfindungsgemäßen Pipettiervorrichtung und dem erfindungsgemäßen Pipettierverfahren zu einer Bewegung des Pipettierkolbens kommen, obwohl das Schritt-Referenzvolumen weiter nur den Wert 0 aufweist, etwa um einer allein durch Kapillarkräfte bewirkten Strömung von Dosierflüssigkeit durch die Pipettieröffnung hindurch entgegenzuwirken. Jedoch sind derartige Kolbenbewegungen lediglich Korrekturbewegungen, die beliebig lange fortdauern können. Der Pipettiervorgang im Sinne der vorliegenden Erfindung beginnt im Zweifel dann, wenn der Pipettierkolben durch eine Änderung eines inkrementellen Schritt-Referenzvolumens von anfänglich 0 auf einen von 0 verschiedenen Wert beginnt, bewegt zu werden. Die Differenz zweier zeitlich unmittelbar aufeinanderfolgender kumulativer bzw. absoluter Schritt-Referenzvolumina steht dabei einem inkrementellen Schritt-Referenzvolumen gleich.

Für ein möglichst stabiles Regelungsverfahren, welches von äußeren Einflüssen nur wenig beeinflussbar ist, kann die Steuervorrichtung dazu ausgebildet sein, das ermittelte Soll-Schritt-Bewegungsvolumen durch Quantifizierung von wenigstens zwei der folgenden drei Parameter zu definieren:

- Soll-Endposition der dosierseitigen Kolbenfläche am Ende des nachfolgenden Pipettierkolben-Bewegungsschritts,
- Soll-Verlagerungsgeschwindigkeit der Kolbenfläche während des nachfolgenden Pipettierkolben-Bewegungsschritts, und
- Dauer des nachfolgenden Pipettierkolben-Bewegungsschritts.

Somit kann nicht nur die Position der dosierseitigen Endfläche, sondern auch die Verlagerungsgeschwindigkeit vorgegeben werden. Beispielsweise können in dem oben erwähnten Datenspeicher der Steuervorrichtung für unterschiedliche Werte von Soll-Dosierflüssigkeitsmengen oder/und für unterschiedliche Werte von Schritt-Referenzvolumina unterschiedliche Verlagerungsgeschwindigkeiten oder Bewegungsdauern hinterlegt sein.

Wie oben anhand der Gleichungen 10, 10' und 10" gezeigt ist, kann die Steuervorrichtung dazu ausgebildet sein, die zweite Korrekturgröße zu bilden auf Grundlage des im zweiten Arbeitsbereich gelegenen Teils des Arbeitsgases und einem Produkt aus einem Druckquotienten und einem Temperaturquotienten, wobei der Druckquotient ein Quotient aus dem erfassten Arbeitsgasdruck und dem Arbeitsgas-Referenzdruck ist und wobei der Temperaturquotient ein Quotient aus der Arbeitstemperatur und der Basistemperatur ist.

Für eine ebenso hochgenaue wie schnelle Bewegung der dosierseitigen Kolbenfläche ist es vorteilhaft, wenn die Antriebsvorrichtung einen Linearmotor umfasst, dessen Läufer der Pipettierkolben ist. Dann umfasst die Arbeitsvorrichtung zur Ausübung einer ausreichend hohen Antriebskraft auf den Pipettierkolben bevorzugt eine Mehrzahl von bestrombaren Spulen, welche längs einer Antriebsstrecke radial außerhalb des Pipettierkanals angeordnet sind. Zur Erzielung einer möglichst homogenen Antriebskraft auf den Pipettierkolben umgeben die Spulen bevorzugt den Pipettierkanal geschlossen in Umfangsrichtung um die Kanalachse. Da die wenigstens zeitabschnittsweise bestromten Spulen eine Wärmequelle bilden, umfasst der zweite Arbeitsbereich die Antriebsstrecke. Das von der dosierseitigen Kolbenfläche bei ihrer Verlagerung überstrichene Volumen liegt daher bevorzugt vollständig im zweiten Arbeitsbereich. Aus Gründen möglichst gut vorhersehbarer thermischer Verhältnisse reicht der erste Arbeitsbereich längs der Kanalbahn bis an den Anordnungsbereich der Spulen. Daher liegt bevorzugt jener Abschnitt des Pipettierkanals, welcher sich vom pipettieröffnungsseitigen Längsende des Anordnungsbereichs der Spulen bis zur Pipettieröffnung erstreckt, zur Außenumgebung der Pipettiervorrichtung frei und bildet den ersten Arbeitsbereich.

Grundsätzlich kann sich während des Betriebs der Pipettiervorrichtung im zweiten Arbeitsbereich in einem dynamischen thermischen Gleichgewicht eine bekannte Arbeitstemperatur einstellen. Diese Gleichgewichts-Arbeitstemperatur kann im oben genannten Datenspeicher hinterlegt sein und zur Regelung des Pipettiervorgangs herangezogen werden. Sicherer und genauer als das Vertrauen auf einen sich immer wieder erneut einstellenden thermischen Gleichgewichtszustand ist jedoch die sensorische Erfassung der Temperatur im zweiten Arbeitsbereich. Daher weist die Pipettiervorrichtung gemäß einer bevorzugten Weiterbildung der vorliegenden Erfindung einen Temperatursensor zur Erfassung der Arbeitstemperatur auf, welcher ein die Arbeitstemperatur repräsentierendes Arbeitstemperatursignal ausgibt.

Zur Vermeidung von Kontaminationen durch aufeinander folgendes Pipettieren unterschiedlicher Dosierflüssigkeiten mit demselben Pipettierkanal weist der Pipettierkanal bevorzugt einen vorrichtungsfesten Kanalabschnitt mit einer Kopplungsformation und mit einer lösbar an die Kopplungsformation gekoppelten Pipettierspitze auf. Die Pipettierspitze weist dann die Pipettieröffnung auf. Dosierflüssigkeit wird dann nur in die Pipettierspitze, nicht jedoch in den vorrichtungsfesten Kanalabschnitt pipettiert.

Zusätzlich zur druck- und temperaturinduzierten Veränderung des Arbeitsgas-Bezugsvolumens während eines Pipettiervorgangs können auch unvermeidliche Leckagen in dem das Arbeitsgas einfassenden Bereich einen nachteiligen Einfluss auf die Pipettiergenauigkeit haben. Arbeitsgas kann beispielsweise am Pipettierkolben vorbei strömen oder auch über die Kopplungsformation zur Ankopplung der Pipettierspitze hinweg. Daher ist bevorzugt die Steuervorrichtung dazu ausgebildet, eine dritte Korrekturgröße zu ermitteln, welche eine Leckage des Pipettierkanals repräsentiert, wobei die Steuervorrichtung dazu ausgebildet ist, das Soll-Schritt-Bewegungsvolumen des Pipettierkolbens zusätzlich auf Grundlage der dritten Korrekturgröße zu ermitteln. Dann kann beispielsweise die obige Gleichung 10 modifiziert werden zu:

$$V_{liquid} = V_{Kolben} - \Delta V_{Kolben} - \Delta V_{sys,rest} - \Delta V_{Leckage} \qquad \text{Gl. 11}$$

Dabei wird bevorzugt von einem Leckagevolumen $\Delta V_{Leckage}$ als der dritten Korrekturgröße ausgegangen. Diese hängt bevorzugt von einer bauartbedingten Leckagerate $K_L$ als einem Leckageparameter und dem Druckunterschied zwischen dem Druck $p_{AB1}$ im Inneren des Pipettierkanals und dem Umgebungsdruck $p_\infty$, sowie von der Wirkdauer des Druckunterschieds ab:

$$\Delta V_{Leckage} = \int_{t1}^{t2} K_L \cdot (p_{AB1} - p_\infty) \cdot dt \qquad \text{Gl. 12}$$

Zur Quantifizierung des Leckagevolumens als der dritten Korrekturgröße kann die Steuervorrichtung dazu ausgebildet sein, die dritte Korrekturgröße auf Grundlage des Druckerfassungssignals und einer Zeitdauer, insbesondere der Dauer des Pipettierkolben-Bewegungsschritts, zu ermitteln.

Die Steuervorrichtung kann weiter dazu ausgebildet sein, die dritte Korrekturgröße auch auf Grundlage des Leckageparameters $K_L$ zu ermitteln. Da sich der Leckageparameter mit der Zeit für eine gegebene Pipettiervorrichtung ändern kann, kann die Steuervorrichtung zur betragsmäßigen Aktualisierung des Leckageparameters weiter dazu ausgebildet sein, auf manuelle Steuerungseingabe hin oder durch vorbestimmte automatisierte Steuerung den Leckageparameter unter Ausführung einer Erfassung einer leckagebedingten zeitlichen Änderung eines anfänglich definierten Arbeitsgasdrucks zu bestimmen.

Beispielsweise kann die Steuervorrichtung auf manuelle Steuerungseingabe hin oder durch vorbestimmte automatisierte Steuerung, etwa in regelmäßigen vorbestimmten Zeitabständen, an den vorrichtungsfesten Kanalabschnitt eine Pipettierspitze mit verschlossener Pipettieröffnung bzw. ohne Pipettieröffnung ankoppeln, durch Bewegung des Pipettierkolbens einen vorbestimmten Druck des Arbeitsgases im Pipettierkanal einstellen und die Änderung des Arbeitsgasdrucks über eine vorgegebene Zeitdauer erfassen. Aus der Änderung des Arbeitsgasdrucks über die vorgegebene Zeitdauer und aus dem Druckunterschied zwischen Arbeitsgasdruck im Pipettierkanal und Umgebungsdruck der Pipettiervorrichtung kann die Steuervorrichtung den Leckageparameter quantifizieren.

Die Pipettiervorrichtung kann einen Drucksensor zur Erfassung des Umgebungsdrucks aufweisen. Alternativ kann der Umgebungsdruck manuell über eine Eingabevorrichtung eingegeben werden.

Die vorliegende Erfindung löst die eingangs genannte Aufgabe auch durch ein Verfahren zur korrekten Dosierung einer Dosierflüssigkeit mit einer Pipettiervorrichtung, insbesondere mit einer Pipettiervorrichtung, wie sie oben beschrieben und weitergebildet ist, unabhängig von den Fließ- oder/und Benetzungseigenschaften der Dosierflüssigkeit, wobei der Pipettierkanal einen ersten Arbeitsbereich aufweist, dessen bekannte Basistemperatur in einem niedrigeren Basistemperaturbereich gelegen ist, und einen zweiten Arbeitsbereich aufweist, dessen bekannte Arbeitstemperatur in einem gegenüber dem Basistemperaturbereich erhöhten Arbeitstemperaturbereich gelegen ist, wobei das Verfahren eine schrittweise Verlagerung eines in einem Pipettierkanal beweglich aufgenommenen Pipettierkolbens durchführt, wobei das Verfahren nach einem ersten Bewegungsschritt des Pipettierkolbens für einen nachfolgenden Pipettierkolben-Bewegungsschritt die folgenden Verfahrensschritte umfasst:

- Erfassen des Drucks des Arbeitsgases,
- Erfassen der Pipettierkolbenposition,

- Ermitteln einer ersten Korrekturgröße, welche eine druckänderungsinduzierte Volumenänderung eines in dem ersten Bereich gelegenen ersten Teils eines im Pipettierkanal eingeschlossenen Arbeitsgasvolumens repräsentiert, auf Grundlage der erfassten Pipettierkolbenposition, des erfassten Arbeitsgasdrucks und eines Arbeitsgas-Referenzdrucks,
- Ermitteln einer zweiten Korrekturgröße, welche eine sowohl druckänderungsals auch temperaturänderungsinduzierte Volumenänderung eines im zweiten Arbeitsbereich gelegenen Teils des im Pipettierkanal eingeschlossenen Arbeitsgasvolumens repräsentiert, auf Grundlage der erfassten Pipettierkolbenposition, des erfassten Arbeitsgasdrucks, des Arbeitsgas-Referenzdrucks, der bekannten Arbeitstemperatur und der bekannten Basistemperatur,
- Ermitteln eines Schätzwertes für im Aufnahmeraum vorhandene Dosierflüssigkeit auf Grundlage der erfassten Pipettierkolbenposition, einer früheren Pipettierkolbenposition, der ersten Korrekturgröße, und der zweiten Korrekturgröße,
- Ermitteln oder Abrufen aus einem Datenspeicher eines dem nachfolgenden Pipettierkolben-Bewegungsschritt zugeordneten Schritt-Referenzvolumens,
- Vergleichen des Schätzwertes und des Schritt-Referenzvolumens miteinander,
- Ermitteln eines Soll-Schritt-Bewegungsvolumens zur Verlagerung des Pipettierkolbens im nachfolgenden Pipettierkolben-Bewegungsschritt.
- Verlagern des Pipettierkolbens um das Soll-Schritt-Bewegungsvolumen.

Die Arbeitstemperatur kann bekannt sein, weil sie sich im Betrieb der Pipettiervorrichtung als Gleichgewichtstemperatur im zweiten Arbeitsbereich einstellt. Das Verfahren kann aber auch den Schritt eines Erfassens der Arbeitstemperatur in dem zweiten Arbeitsbereich des Pipettierkanals aufweisen.

Weiterbildungen der oben beschriebenen Pipettiervorrichtung, die bevorzugt nach dem genannten Verfahren arbeitet, sind auch Weiterbildungen des erfindungsgemäßen Verfahrens und umgekehrt.

Die vorliegende Erfindung wird nachfolgend anhand der beiliegenden Zeichnungen näher erläutert werden. Es stellt dar:

Fig. 1       eine erfindungsgemäße Ausführungsform einer Pipettiervorrichtung der vorliegenden Anmeldung zu Beginn eines erfindungsgemäßen Aspirationsverfahrens als einem Pipettierverfahren der vorliegenden Anmeldung,

Fig. 2       die Pipettiervorrichtung von Fig. 1 während des Pipettierverfahrens nach einem ersten, kleineren Aspirationsfortschritt,

Fig. 3       die Pipettiervorrichtung der Fig. 1 und 2 während des Pipettierverfahrens nach einem zweiten, größeren Aspirationsfortschritt,

Fig. 4A      einen Graphen eines erfindungsgemäßen Aspirationsvorgangs mit Darstellung des Schritt-Referenzvolumens, des Schätzwerts für das Volumen von im Pipettierkanal aufgenommener Dosierflüssigkeit und des von der dosierseitigen Kolbenfläche überstrichenen Volumens, und

Fig. 4B      einen Graphen eines herkömmlichen Aspirationsvorgangs mit bloßer Steuerung des Kolbenhubs nach Maßgabe des zu dosierenden Soll-Dosierflüssigkeitsvolumens.

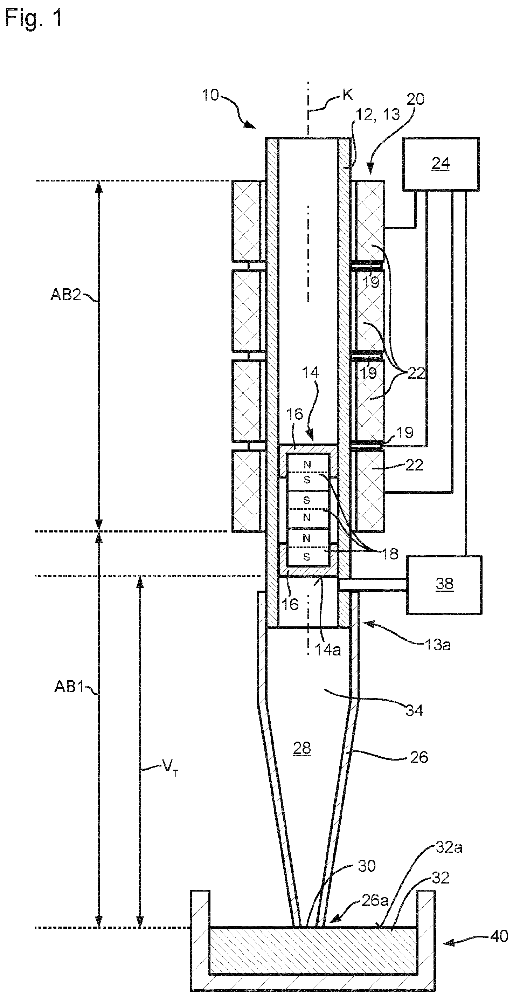

In den Figuren 1 bis 3 ist eine erfindungsgemäße Pipettiervorrichtung allgemein mit 10 bezeichnet. Diese umfasst einen Pipettierkanal 12, gebildet durch einen Zylinder 13 als einem vorrichtungsfesten Kanalabschnitt und durch eine lösbar mit dem Zylinder 13 koppelbare Pipettierspitze 26. Der Pipettierkanal 12 erstreckt sich längs einer als geradlinige Kanalachse ausgestalteten Kanalbahn K. In diesem Pipettierkanal 12 ist ein Kolben 14 längs der Kanalbahn K beweglich aufgenommen.

Der Kolben 14 umfasst zwei nur in Figur 1 mit Bezugszeichen versehene Endkappen 16, zwischen welchen eine Mehrzahl von Permanentmagneten 18 (im vorliegenden Beispiel drei Permanentmagnete 18) aufgenommen sind. Die Permanentmagnete 18 sind zur Erzielung eines längs der Kanalbahn K trennscharfen Magnetfelds längs der Kanalachse K polarisiert und paarweise mit aufeinander zuweisenden gleichnamigen Polen angeordnet. Aus dieser Anordnung resultiert ein vom Kolben 14 ausgehendes Magnetfeld, welches um die Kanalachse K weitestgehend gleichförmig, also im Wesentlichen rotationssymmetrisch bezüglich der Kanalachse K ist und welches längs der Kanalachse K einen hohen Gradienten der magnetischen Feldstärke aufweist, sodass sich ungleichnamige Polarisierungszonen trennscharf längs der Kanalbahn K alternierend abwechseln. Damit kann beispielsweise durch lediglich symbolisch angedeutete Hall-Sensoren 19 eine hohe Positionsauflösung bei der Positionserfassung des Kolbens 14 längs der Kanalachse K erreicht werden und es kann eine sehr effiziente Ankopplung eines äußeren Magnetfelds an den Kolben 14 erreicht werden.

Die Endkappen 16 sind bevorzugt aus reibungsarmem, Graphit umfassenden Material gebildet, wie es beispielsweise von kommerziell erhältlichen Kolben der Fa. Airpot Corporation in Norwalk, Connecticut, (US) bekannt ist. Um die von diesem Material bereitgestellte geringe Reibung möglichst vollständig ausschöpfen zu können, ist der Zylinder 13 bevorzugt als Glaszylinder ausgebildet, so dass bei einer Bewegung des Kolbens 14 längs der Kanalachse K das Graphit umfassende Material äußerst reibungsarm an einer Glasfläche gleitet.

Der Kolben 14 bildet somit einen Läufer eines Linearmotors 20, dessen Stator von den Pipettierkanal 12 umgebenden Spulen 22 (hier sind beispielhaft lediglich vier Spulen dargestellt) gebildet ist.

Es sei ausdrücklich darauf hingewiesen, dass die Figuren 1 bis 3 lediglich eine grobschematische Längsschnittdarstellung einer erfindungsgemäßen Pipettiervorrichtung 10 zeigen, die keinesfalls maßstäblich zu verstehen ist. Weiterhin sind Mehrzahlen von Bauteilen durch eine beliebige Bauteilanzahl, wie etwa drei Permanentmagnete 18 und vier Spulen 22, dargestellt. Tatsächlich kann sowohl die Anzahl der Permanentmagnete 18 wie auch die Anzahl der Spulen 22 größer oder auch kleiner als die dargestellte Anzahl sein.

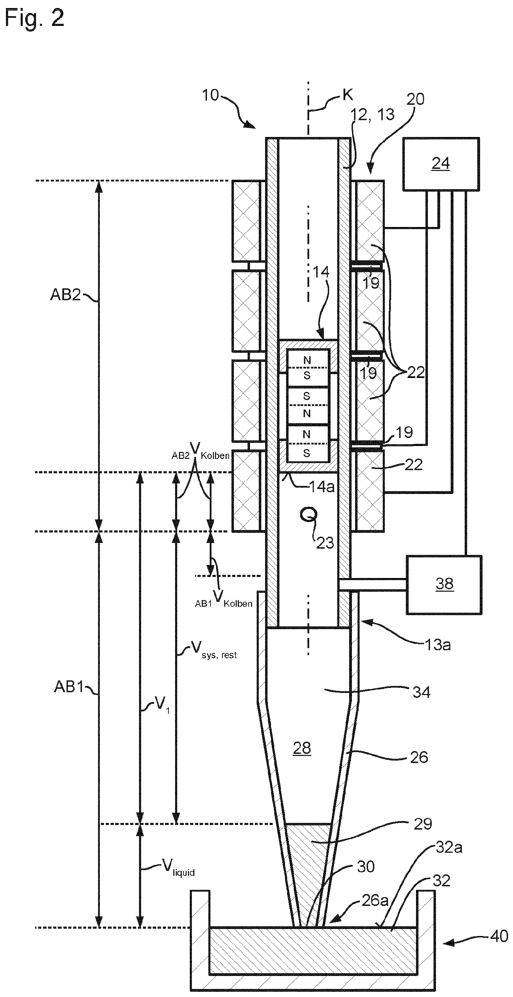

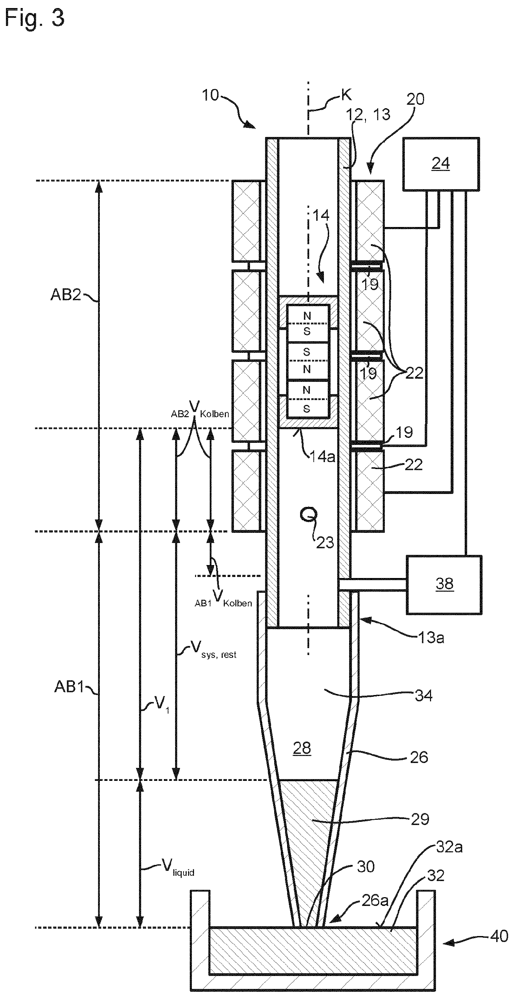

Der Linearmotor 20, genauer seine Spulen 22, werden über eine Steuereinrichtung 24 angesteuert, die signalübertragungsmäßig mit den Spulen 22 verbunden ist. Als Signal gilt auch die Übertragung elektrischen Stroms zur Bestromung der Spulen und damit zur Erzeugung eines Magnetfelds durch diese. Die Steuereinrichtung 24 erhält Druckerfassungssignale, welche den Druck eines Arbeitsgases 34 im Pipettierkanal 12 repräsentieren, von einem Drucksensor 38, erhält Positionserfassungssignale, welche die Position des Pipettierkolbens 14 repräsentieren, von den Hall-Sonden 19 und erhält Temperaturerfassungssignale, welche die Temperatur des Arbeitsgases 34 in einem unten erläuterten zweiten Arbeitsbereich AB2 des Pipettierkanals 12 repräsentieren, von einem Temperatursensor 23. Der Temperatursensor 23 ist in Figur 1 vom Pipettierkolben 14 verdeckt und ist nur in den Figuren 2 und 3 sichtbar.

An dem dosierseitigen Ende 13a des Zylinders 13 ist in an sich bekannter Weise lösbar eine Pipettierspitze 26 angebracht, welche den Pipettierkanal 12 über den Zylinder 13 hinaus verlängert. Die Verbindung der Pipettierspitze 26 mit dem dosierseitigen Längsende 13a des Zylinders 13 ist ebenfalls lediglich grobschematisch dargestellt.

Die Pipettierspitze 26 definiert einen Pipettierraum 28 in ihrem Inneren, welcher am kopplungsfernen Längsende 26a ausschließlich durch eine Pipettieröffnung 30 zugänglich ist.

In dem in den Figuren 1 bis 3 dargestellten Beispiel eines Aspirationsvorgangs wird im Pipettierraum 28 eine Menge 31 an Dosierflüssigkeit 32 aufgenommen. In Figur 1 ist ein Betriebszustand der Pipettiervorrichtung 10 zu Beginn eines Aspirationsvorgangs gezeigt, bei welchem der Pipettierkanal 12 mit der Pipettierspitze 26 und deren Pipettieröffnung 30 gerade den Flüssigkeitsspiegel 32a eines Dosierflüssigkeitsvorrats 40 berührt, sodass Arbeitsgas 34 zwischen der Pipettieröffnung 30 und der dosierseitigen Kolbenfläche 14a eingeschlossen ist. Die dosierseitige Kolbenfläche 14a ist im vorliegenden Beispiel durch eine in axialer Richtung - bezogen auf die Kanalbahn K - zur Dosieröffnung 30 hin weisende Endfläche der Endkappe 16 gebildet.

Zwischen dem Kolben 14 und der Dosierflüssigkeit 32 befindet sich bei dem hier betrachteten "Air-Displacement"-Pipettierverfahren dauerhaft das Arbeitsgas 34, welches als Kraftvermittler zwischen dem Kolben 14 und der Dosierflüssigkeit 32 dient.

In dem in Figur 1 gezeigten Betriebszustand ist zwischen der dosierseitigen Kolbenfläche 14a und der durch Dosierflüssigkeit 32 verschlossenen Pipettieröffnung 30 Arbeitsgas 34 mit einem Arbeitsgas-Totvolumen $V_T$ eingeschlossen. Die dosierseitige Kolbenfläche 14a befindet sich in dem Anfangszustand der Pipettiervorrichtung 10 für den nachfolgenden Aspirationsvorgang bevorzugt in einem unteren Totpunkt. In diesem befindet sich die dosierseitige Kolbenfläche 14a in einem ersten Arbeitsbereich AB1, welcher von der Pipettieröffnung 30 bis zum axialen Beginn des Linearmotors 20 reicht. In diesem ersten Arbeitsbereich AB1 ist der Pipettierkanal 12 radial außen unmittelbar von der Umgebungsatmosphäre benetzt, sodass die Temperatur $T_{AB1}$ des eingeschlossenen Arbeitsgas 34 im ersten Arbeitsbereich AB1 konstant der Umgebungstemperatur $T_\infty$ entspricht. Da der Pipettierraum 28 bis kurz vor dem Aufsetzen der Pipettieröffnung 30 auf dem Spiegel 32a der Dosierflüssigkeit 32 mit der Umgebungsatmosphäre kommunizieren konnte, ist der Druck $p_{AB1}$ des eingeschlossenen Arbeitsgases 34 im Betriebszustand der Pipettiervorrichtung 10 von Figur 1 der Umgebungsdruck $p_\infty$. Figur 1 zeigt die Pipettiervorrichtung 10 in einem Bezugszustand des anschließenden Aspirationsvorgangs. Die genannten Parameterwerte sind daher Bezugswerte.

Konstruktiv bedingt schließt sich axial an den ersten Arbeitsbereich AB1 ein zweiter Arbeitsbereich AB2 an, welcher sich axial über die Länge des Linearmotors 20 bzw. der Anordnung der Spulen 22 derselben erstreckt. Die zum Antrieb des Pipettierkolbens 14 längs der Kanalbahn K bestrombaren Spulen 22 Stellen eine Wärmequelle da, welche im Betrieb längs ihrer Erstreckung, also längs des zweiten Arbeitsbereichs AB2 bewirken, dass die Temperatur $T_{AB2}$ im Inneren des Pipettierkanals 12 im zweiten Arbeitsbereich AB2 gegenüber der Temperatur $T_{AB1}$ im ersten Arbeitsbereich AB1 erhöht ist. Die erhöhte Temperatur $T_{AB2}$ im zweiten Arbeitsbereich AB2 wird entweder mit dem in den Figuren 2 und 3 gezeigten Temperatursensor 23 erfasst oder ist bekannt, weil sich im dauerhaften Betrieb der Pipettiervorrichtung 10 eine konstante erhöhte Gleichgewichtstemperatur $T_{AB2}$ einstellt.

Die Dosierflüssigkeit 32 und die für ihre Aspiration und Dispensation notwendigen werkstoffabhängigen Parameter seien unbekannt.

Ausgehend von der Anfangssituation von Figur 1 soll eine vorbestimmte Menge an Dosierflüssigkeit 32 in den Pipettierkanal 12 aspiriert werden. Hierzu wird der Pipettierkolben 14 mit einer Schrittfrequenz von zwischen 100 Hz und 50.000 Hz längs der Kanalbahn K in Aspirationsrichtung, also von der Pipettieröffnung 30 weg bewegt. Die Bewegung wird von der Steuereinrichtung 24 geregelt.

Über eine manuelle Eingabe, eine netzwerkgestützte Datenabfrage oder über weitere nicht eigens dargestellte Sensoren fragt die Steuereinrichtung 24 den Umgebungsdruck und die Umgebungstemperatur ab. Außerdem liest die Steuereinrichtung 24 eine in einem Datenspeicher der Steuereinrichtung 24 hinterlegte, bevorzugt von der zu aspirierenden Soll-Dosierflüssigkeitsmenge abhängige Anzahl an Pipettierkolben-Bewegungsschritten aus. Alternativ kann diese Anzahl an Pipettierkolben-Bewegungsschritten von der Steuereinrichtung 24 auch durch eine Formel berechnet oder an diese durch manuelle Eingabe eingegeben werden.

Ausgehend von der bekannten zu aspirierenden Soll-Dosierflüssigkeitsmenge erhält die Steuereinrichtung durch Abfrage eines entsprechend gefüllten Datenspeichers oder durch Berechnung aus einer Formel für die einzelnen Pipettierkolben-Bewegungsschritte Schritt-Referenzvolumina, entweder als inkrementelles Schritt-Referenzvolumen, welches in Kenntnis der Größe der dosierseitigen Kolbenfläche 14a ausgehend von einer Kolbenposition zu Beginn eines Pipettierkolben-Bewegungsschrittes zurückgelegt werden soll, oder als kumulatives Schritt-Referenzvolumen, welches in Kenntnis der Größe der dosierseitigen Kolbenfläche 14a die Endposition am Ende eines Pipettierkolben-Bewegungsschritte angibt. Ein Schritt-Korrekturbewegungsvolumen als ein Korrekturwert wird initialisiert, beispielsweise durch den Wert 0.

Die dosierseitige Kolbenfläche 14a wird mittels entsprechender Bestromung der Spulen 22 in einem ersten Pipettierkolben-Bewegungsschritt ein Soll-Schritt-Bewegungsvolumen entsprechend der Summe aus dem Schritt-Referenzvolumen für diesen Bewegungsschritt und dem Schritt-Korrekturbewegungsvolumen für diesen Bewegungsschritt von der Pipettieröffnung 30 weg verlagert. Da der Schritt-Korrekturbewegungsvolumen für diesen ersten Schritt den beispielhaften Initialisierungswert von 0 aufweist, ist das Soll-Schritt-Bewegungsvolumen in diesem Fall das Schritt-Referenzvolumen.

Da der Pipettierkolben-Bewegungsschritt ausgehend von der Anfangsposition der dosierseitigen Kolbenfläche 14a vollständig im ersten Arbeitsbereich AB1 des Pipettierkanals 12 liegt, wird die durch die Bewegung der dosierseitigen Kolbenfläche 14a bewirkte Zustandsänderung des eingeschlossenen Arbeitsgas 34 wie eine isotherme Zustandsänderung behandelt.

Über den Drucksensor 38 wird der Druck $p_{AB1}$ des eingeschlossenen Arbeitsgases 34 erfasst, der aufgrund der erfolgten Kolbenbewegung geringer ist als der anfängliche Umgebungsdruck $p_\infty$.

Über obige Gleichung 10' - oder über obige Gleichung 11, wenn Leckageverluste berücksichtigt sein sollen - wird mit bekanntem $V_{Kolben}$, das in diesem Fall dem ersten Schritt-Referenzvolumen entspricht, und wegen der ausschließlichen Bewegung der Kolbenfläche 14a im ersten Arbeitsbereich mit $_{AB2}V_{Kolben} = 0$, sowie mit dem gemessenen Druck $p_{AB1}$ des eingeschlossenen Arbeitsgases 34 die nach dem ersten Pipettierkolben-Bewegungsschritt im Pipettierkanal 12 vorhandene Menge an Dosierflüssigkeit $V_{liquid}$ als Schätzvolumen abgeschätzt.

Mit dem Schritt-Referenzvolumen und dem Schätzvolumen $V_{liquid}$ wird ein Unterschiedswert gebildet, etwa durch Differenzenbildung, welcher den betragsmäßigen Unterschied zwischen dem Schritt-Referenzvolumen und dem Schätzvolumen $V_{liquid}$ angibt.

Ausgehend von dem Unterschiedswert wird durch eine grundsätzlich bekannte PID-Regelung das Schritt-Korrekturbewegungsvolumen als ein Korrekturwert berechnet, mit welchem das Schritt-Referenzvolumen des nachfolgenden Pipettierkolben-Bewegungsschritts zu einem Soll-Schritt-Bewegungsvolumen korrigiert wird. Hierzu wird der Unterschiedswert mit einem proportionalen Umwandlungsglied, einem differenziellen Umwandlungsglied und einem integralen Umwandlungsglied in das Schritt-Korrekturbewegungsvolumen umgerechnet. Die einzelnen Umwandlungsglieder können durch experimentell bestimmte Gewichtungsfaktoren gewichtet sein.

Der Zähler der Pipettierkolben-Bewegungsschritte wird um 1 inkrementiert, und dann, wenn die maximale Anzahl an Pipettierkolben-Bewegungsschritten noch nicht erreicht ist, wird das dem nächsten Pipettierkolben-Bewegungsschritt zugeordnete Schritt-Referenzvolumen herangezogen und mit dem zuvor bestimmten Schritt-Korrekturbewegungsvolumen zu einem Soll-Schritt-Bewegungsvolumen korrigiert, beispielsweise durch Summen- oder Differenzenbildung. Die dosierseitige Kolbenfläche 14a wird dann entsprechend dem Soll-Schritt-Bewegungsvolumen unter Berücksichtigung ihrer Flächengröße bewegt, d. h. das Soll-Schritt-Bewegungsvolumen wird durch die betragsmäßige Größe der dosierseitigen Kolbenfläche 14a geteilt und so der Verlagerungsweg der Kolbenfläche 14a längs der Kolbenbahn K erhalten.

Dann wird erneut, wie oben beschrieben, der Druck $p_{AB1}$ des eingeschlossenen Arbeitsgases 34 erfasst und aus Gleichung 10' - oder aus Gleichung 11, wenn Leckageverluste berücksichtigt sein sollen - mit bekanntem $V_{Kolben}$, immer noch mit $_{AB2}V_{Kolben} = 0$ und mit dem gemessenen Druck $p_{AB1}$ des eingeschlossenen Arbeitsgases 34 die nach dem erfolgten Pipettierkolben-Bewegungsschritt im Pipettierkanal 12 vorhandene Menge an Dosierflüssigkeit $V_{liquid}$ abgeschätzt.

Es folgt erneut die beschriebene Bildung des Unterschiedswerts zwischen dem Schritt-Referenzvolumens und dem Schätzwert $V_{liquid}$ sowie hieraus die oben beschriebene Berechnung eines weiteren Schritt-Korrekturbewegungsvolumens. Dieses weitere Schritt-Korrekturbewegungsvolumen dient wiederum der Ermittlung des nächsten Soll-Schritt-Bewegungsvolumens. Darauf folgt die Inkrementierung des Schrittzählers und die erneute Bewegung der dosierseitigen Kolbenfläche 14a.

Diese Abfolge wird in der beschriebenen Weise iterativ durchlaufen, bis die dosierseitige Kolbenfläche 14a die Grenze zwischen dem ersten und dem zweiten Arbeitsbereich AB1, AB2 erreicht hat, sodass eine weitere Bewegung der Kolbenfläche 14a nicht mehr im ersten Arbeitsbereich AB1, sondern im zweiten Arbeitsbereich AB2 erfolgt.

Dann, wenn die dosierseitige Kolbenfläche 14a im zweiten Arbeitsbereich AB2 bewegt wird, sodass mit einer Bewegung der Kolbenfläche 14a eine Verschiebung von eingeschlossenem Arbeitsgas 34 zwischen dem ersten Arbeitsbereich AB1 und dem zweiten Arbeitsbereich AB2 bewirkt wird, wird im Grunde der obige Ablauf beibehalten, jedoch wird in den obigen Gleichungen 10, 10' oder 10" bzw. 11, welche zur Bestimmung des Schätzwertes $V_{liquid}$ verwendet werden können, der dann von 0 verschiedene aktuelle Wert von $_{AB2}V_{Kolben}$ verwendet. Hierdurch wird die Verschiebung von Arbeitsgasanteilen zwischen dem ersten Arbeitsbereich AB1 und dem zweiten Arbeitsbereich AB2 und deren Temperaturänderung zusätzlich zur Druckänderung berücksichtigt.

Es wird also erneut die dosierseitige Kolbenfläche 14a gemäß dem zuletzt berechneten Soll-Schritt-Bewegungsvolumen verlagert. Dann werden der Druck $p_{AB1}$ des eingeschlossenen Arbeitsgases 34 durch den Drucksensor 38 sowie die Temperatur $T_{AB2}$ des Arbeitsgases im zweiten Arbeitsbereich AB2 durch den Temperatursensor 23 erfasst. Die Temperatur $T_{AB1}$ des Arbeitsgases im ersten Arbeitsbereich AB1 wird weiterhin als konstant angenommen und aus den oben genannten Erwägungen mit der Umgebungstemperatur $T_{\infty}$ gleichgesetzt.

Es wird anschließend unter Verwendung der erfassten Parameter auf Grundlage einer der Gleichungen 10, 10' oder 10" bzw. 11 ein Schätzwert $V_{liquid}$ für das im Pipettierkanal 12 aufgenommene Volumen an Dosierflüssigkeit 32 bestimmt. Durch Vergleich des Schätzwertes mit dem dem aktuellen Pipettierkolben-Bewegungsschritt zugeordneten Schritt-Referenzvolumen wird ein Unterschiedswert bestimmt und auf Grundlage des Unterschiedswerts wird anhand der oben beschriebenen und in ihrem Grundsatz bekannten PID-Regelung das Schritt-Korrekturbewegungsvolumen ermittelt. Mit diesem Schritt-Korrekturbewegungsvolumen wird das Schritt-Referenzvolumen zu einem Soll-Schritt-Bewegungsvolumen korrigiert.

Wenn nach Inkrementierung des Schrittzählers die maximale Schrittanzahl für den Pipettiervorgang noch nicht erreicht ist, wird der nächste Pipettierkolben-Bewegungsschritt mit dem Soll-Schritt-Bewegungsvolumen als Sollvorgabe für eine Bewegung der dosierseitigen Kolbenfläche 14a durchgeführt.

Dieser Ablauf wird iterativ durchlaufen, bis entweder die für den Pipettiervorgang bestimmte maximale Schrittanzahl erreicht ist oder bis der Unterschiedswert, gegebenenfalls eine vorbestimmte Anzahl an aufeinanderfolgenden Schritten hintereinander, unter einer vorbestimmten Betragsschwelle liegt, sodass das mit einer der Gleichungen 10, 10' oder 10" bzw. 11 bestimmte Schätzvolumen an im Pipettierkanal vorhandener Dosierflüssigkeit 32 ausreichend genau mit der Soll-Dosierflüssigkeitsmenge übereinstimmt.

Vorteilhafterweise ist der Verlauf der Schritt-Referenzvolumina über die für einen Pipettiervorgang vorgesehene Anzahl an Pipettierkolben-Bewegungsschritten nichtlinear, sondern degressiv gewählt, d. h. der Wertzuwachs des kumulativen Schritt-Referenzvolumens oder der kumulierten inkrementellen Schritt-Referenzvolumina - je nachdem, was zutrifft - ist zu Beginn des Pipettiervorgangs größer als gegen Ende des Pipettiervorgangs. Dabei ändert sich das Schritt-Referenzvolumen für wenigstens die letzten 30 % der Pipettierkolben-Bewegungsschritte eines Pipettiervorgangs betragsmäßig um nicht mehr als 10 %, bezogen auf den größeren von zwei Vergleichswerten. Der Vorteil eines degressiven Verlaufs von Schritt-Referenzvolumina liegt darin, dass zum Ende des Pipettiervorgangs hin der Einfluss der aus den Unterschiedswerten bestimmten Korrekturwerte auf die Bewegung der dosierseitigen Kolbenfläche 14a überwiegt. Somit kann gegen Ende des Pipettiervorgangs, beispielsweise während der letzten 30 % der Pipettierkolben-Bewegungsschritte durch die Bestimmung der Unterschiedswerte und der daraus resultierenden Korrekturwerte (Schritt-Korrekturbewegungsvolumina) der Einfluss der unterschiedlichen Fließeigenschaften unterschiedlicher Dosierflüssigkeiten ausgeglichen werden.

Unterschiedliche Dosierflüssigkeiten werden abhängig von ihren für das Pipettieren relevanten Einflussgrößen, wie Viskosität, Dichte, Oberflächenspannung, Benetzung Verhalten relativ zum Material des Pipettierkanals, unterschiedlich schnell zur gewünschten Soll-Dosierflüssigkeitsmenge konvergieren. Wählt man die Anzahl an Pipettierkolben-Bewegungsschritten ausreichend groß, kann man sicherstellen, dass auch Dosierflüssigkeiten mit vergleichsweise hoher Dichte und hoher Viskosität ohne Kenntnis ihrer exakten Flüssigkeitsparameter genau pipettiert werden können.

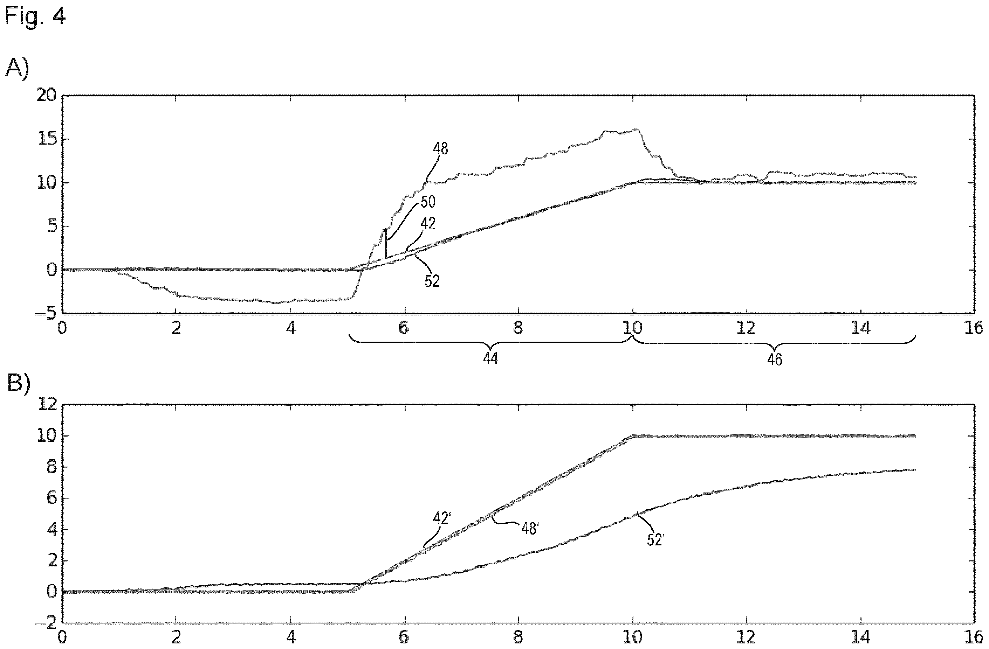

In Figur 4A ist der Graph eines Aspirationsvorgangs als Ausführungsbeispiel für einen erfindungsgemäßen Pipettiervorgang dargestellt. Die Abszisse des Koordinatensystems von Figur 4A bezeichnet die Zeit in Sekunden, also von 0 bis 16 Sekunden. Die Ordinate bezeichnet ein Volumen in Mikrolitern ($\mu l$), also von -5 bis 20 $\mu l$.

Das zu aspirierende Soll-Dosierflüssigkeitsvolumen beträgt 10 $\mu l$. Die zu aspirierende Dosierflüssigkeit ist Glycerin.

Mit Bezugszeichen 42 ist der Verlauf des Schritt-Referenzvolumens als kumulativer Wert dargestellt. Es verbleibt bis t = 5 Sekunden nach dem Beginn des Aspirationsvorgangs auf einem Wert von 0 $\mu l$ und steigt dann in einem Zeitbereich von 5 Sekunden bis 10 Sekunden linear von 0 $\mu l$ auf das Soll-Dosierflüssigkeitsvolumen von 10 $\mu l$ an.

Der Pipettiervorgang beginnt daher erst bei t = 5s. Im Zeitbereich von 10 bis 15 Sekunden verbleibt das Schritt-Referenzvolumen auf dem Wert des Soll-Dosierflüssigkeitsvolumens von 10 μl. Der Zeitbereich von 5 Sekunden bis 10 Sekunden bildet somit einen ersten Schrittbereich 44 im oben beschriebenen Sinne, in welchem das kumulative Schritt-Referenzvolumen auf wenigstens 95 % des Soll-Dosierflüssigkeitsvolumens anwächst. Der Bereich von 10 bis 15 Sekunden bildet einen zweiten Schrittbereich 46 im oben beschriebenen Sinne, in welchen das kumulative Schritt-Referenzvolumen einen Bereich von 95 % bis 105 % des Soll-Dosierflüssigkeitsvolumens nicht verlässt. Genauer steigt das kumulative Schritt-Referenzvolumen im ersten Schrittbereich 44 von 0 % auf genau 100 % des Soll-Dosierflüssigkeitsvolumens an und verbleibt im zweiten Schrittbereich 46 auf genau 100 % des Soll-Dosierflüssigkeitsvolumens.

Mit Bezugszeichen 48 ist in Figur 4A das von der dosierseitigen Endfläche 14a während des Pipettiervorgangs überstrichene Volumen aufgetragen.

Ausgehend von der 0-Stellung zu Beginn des Pipettiervorgangs ist das von der dosierseitigen Endfläche 14a überstrichene Volumen zunächst negativ, d. h. die dosierseitige Endfläche 14a wird in einem Dispensationssinn der Pipettieröffnung 30 angenähert, um einem durch Kapillarkräfte bewirkten Einströmen von Glycerin in die Pipettierspitze 26 entgegenzuwirken.

Die Volumendifferenz 50 zwischen dem von der dosierseitigen Endfläche 14a überstrichenen Volumen, was tatsächlich dem Bewegungsvolumen und somit den kumulierten Soll-Schritt-Bewegungsvolumen der dosierseitigen Endfläche 14a entspricht, und dem Schritt-Referenzvolumen ist das wie oben beschrieben berechnete Schritt-Korrekturbewegungsvolumen.

Mit Bezugszeichen 52 ist der wie oben berechnete Schätzwert des im Pipettierkanal 12 bzw. im Aufnahmeraum 28 aufgenommenen Dosierflüssigkeitsvolumens bezeichnet.

Wie Figur 4A zeigt, wird zunächst durch eine Bewegung des Pipettierkolbens 14 lediglich ein kapillares Einströmen von Glycerin in die Pipettierspitze 26 entsprechend der Vorgabe durch das Schritt-Referenzvolumen 42 verhindert.

Dann, wenn das Schritt-Referenzvolumen 42 zum Zeitpunkt 5 Sekunden betragsmäßig beginnt größer zu werden, bleibt die Dosierflüssigkeit zunächst unter dem Schritt-Referenzvolumen 42, schießt jedoch dann, wenn das Schritt-Referenzvolumen 42 zum Zeitpunkt 10 Sekunden konstant auf dem erreichten Soll-Dosierflüssigkeitsvolumen verbleibt, über das Schritt-Referenzvolumen hinaus.

Der an den ersten Schrittbereich 44 anschließende zweite Schrittbereich 46 dient dazu, wie oben bereits ausführlich beschrieben, nach einer groben Aufnahme in etwa des Soll-Dosierflüssigkeitsvolumens im Aufnahmeraum 28, durch Korrekturbewegungen der dosierseitigen Endfläche 14a die Tendenzen zum Überschießen bzw. Nachfließen der Dosierflüssigkeit zu korrigieren. Da das Soll-Dosierflüssigkeitsvolumen größtenteils bereits im ersten Schrittbereich 44 in den Aufnahmeraum 28 aufgenommen wurde, fallen die einzelnen Soll-Schritt-Bewegungsvolumina der dosierseitigen Endfläche 14a im zweiten Schrittbereich 46 geringer aus als im ersten Schrittbereich 44, was zu einer hohen Dosiergenauigkeit des Pipettiervorgangs insgesamt führt. Im dargestellten Beispiel dauert der zweite Schrittbereich 46 etwa genauso lange wie der erste Schrittbereich 44 und umfasst daher etwa gleich viele Bewegungsschritte des Pipettierkolbens 14.

In Figur 4B ist aufgetragen, wie sich Glycerin bei einer rein weg-zeit-gesteuerten Aspirationsbewegung des Pipettierkolbens 14 verhält, wenn dieser unter Berücksichtigung des Flächeninhalts der dosierseitigen Endfläche 14a um das gewünschte Soll-Dosierflüssigkeitsvolumen angehoben wird.

Wiederum bezeichnet die Abszisse die Zeit in Sekunden und die Ordinate ein Volumen in μl.

Mit dem Bezugszeichen 42' ist in Figur 4B die Soll-Bewegungstrajektorie der dosierseitigen Endfläche 14a bezeichnet. Diese entspricht exakt dem kumulierten Schritt-Referenzvolumen von Figur 4A.

Mit Bezugszeichen 48' ist die der Soll-Bewegungstrajektorie 42' weg-zeit-gesteuert folgende Bewegungskurve der dosierseitigen Endfläche 14a bezeichnet. Da eine Weg-Zeit-Steuerung der dosierseitigen Endfläche 14a nach Maßgabe der Soll-Bewegungstrajektorie 42' technisch unproblematisch ist, folgt die dosierseitige Endfläche 14a der Sollvorgabe sehr genau.

Mit Bezugszeichen 52' ist das in der Pipettierspitze 26 aufgenommene Dosierflüssigkeitsvolumen über die Zeit aufgetragen. An dem Graphen der Figur 4B ist sehr gut zu erkennen, dass ohne entsprechende Gegensteuerung durch den Pipettierkolben 14 etwa bei t = 1 Sekunde Glycerin beginnt, allein getrieben durch Kapillarkräfte durch die Pipettieröffnung 30 in den Aufnahmeraum 28 der Pipettierspitze 26 einzuströmen. Bei t = 1 Sekunde wird in beiden Fällen, also gemäß Figur 4A und 4B, die Pipettieröffnung 30 in den Dosierflüssigkeitsvorrat 32 eingetaucht.

Mit Beginn der Kolbenbewegung zum Zeitpunkt t = 5 s beginnt auch Glycerin weiter in den Aufnahmeraum 28 der Pipettierspitze 26 einzuströmen, diesmal jedoch getrieben von dem durch die Kolbenbewegung erzeugten Unterdruck im Arbeitsgas 34 relativ zum Umgebungsdruck.

Nach dem Ende der Kolbenbewegung zum Zeitpunkt t = 10 s strömt Glycerin weiterhin durch die Pipettieröffnung 30 in den Aufnahmeraum 28, bis der Unterdruck im Pipettierkanal 12 (und damit im Aufnahmeraum 28) soweit abgebaut ist, dass er mit der von Glycerin gebildeten Flüssigkeitssäule 29 im Aufnahmeraum 28 im Wesentlichen im Kräftegleichgewicht steht. Damit werden jedoch nur etwas weniger als 8 μl an Glycerin im Aufnahmeraum 28 aufgenommen, obwohl der Pipettierkolben 14 als Treiber der Glycerinaufnahme eine Bewegung von 10 μl ausführt.

In herkömmlichen Pipettiersystemen wäre im Datenspeicher der Steuervorrichtung 24 eine Flüssigkeitsklasse hinterlegt, der Glycerin zugeordnet wäre und der ein Faktor zu entnehmen wäre, um welchen das Soll-Bewegungsvolumen des Pipettierkolben 14 ausgehend von den gewünschten 10 μl erhöht werden muss, sodass in der Pipettierspitze 26 am Ende der Kolbenbewegung die gewünschten 10 μl an Glycerin aufgenommen wären. Dieser Faktor ist empirisch im Labor zu bestimmen.

Wie der Vergleich der Figuren 4A und 4B zeigt, kann mit der vorliegenden Erfindung das gewünschte Soll-Dosierflüssigkeitsvolumen aufgrund der beschriebenen volumenbasierten Steuerung ohne Kenntnis der Flüssigkeitsklasse der Dosierflüssigkeit und ohne Kenntnis der konkreten Fließeigenschaften der Dosierflüssigkeit hochgenau und sogar in kürzerer Zeit hochgenau pipettiert werden als mit einem herkömmlichen weg- oder weg-zeit-bewegungsgesteuerten Pipettierkolben 14.

**Patentansprüche**

1.  Pipettiervorrichtung (10) zum Pipettieren, also zum Aspirieren oder/und zum Dispensieren, einer Dosierflüssigkeit (32) unter Vermittlung eines Arbeitsgases (34), wobei die Pipettiervorrichtung (10) umfasst:

    - einen sich längs einer Kanalachse (K) erstreckenden Pipettierkanal (12),
    - einen im Pipettierkanal (12) längs der Kanalachse (K) beweglichen Pipettierkolben (14),
    - einen Aufnahmeraum (28) zur Aufnahme von Dosierflüssigkeit (32), welcher sich im Pipettierkanal (12) längs der Kanalachse (K) von einer Pipettieröffnung (30) an einem Ende bis zu einer der Pipettieröffnung (30) zugewandten dosierseitigen Kolbenfläche (14a) des Pipettierkolbens (14) am anderen Ende erstreckt, wobei im Pipettierkanal (12) unmittelbar an die dosierseitige Kolbenfläche (14a) angrenzend Arbeitsgas (34) aufgenommen ist, wobei ein Arbeitsgas-Bezugsvolumen ($V_T$) definiert ist durch das Volumen an Arbeitsgas (34), welches sich, unter einem Arbeitsgas-Referenzdruck ($p_\infty$) stehend, im Aufnahmeraum (28) befindet,
    - eine kraftübertragend mit dem Pipettierkolben (14) gekoppelte Antriebsvorrichtung (20), welche dazu ausgebildet ist, den Pipettierkolben (14) längs der Kanalachse (K) zu verlagern,
    - eine Positionserfassungsvorrichtung (19), welche eine Position des Pipettierkolbens (14) längs der Kanalachse (K) erfasst und ein die erfasste Position repräsentierendes Positionserfassungssignal ausgibt,
    - eine Druckerfassungsvorrichtung (38), welche einen Druck des Arbeitsgases (34) im Pipettierkanal (12) erfasst und ein den erfassten Druck repräsentierendes Druckerfassungssignal ausgibt, und
    - eine Steuervorrichtung (24),
    wobei die Steuervorrichtung (24) dazu ausgebildet ist, die Antriebsvorrichtung (20) nach Maßgabe

    - des Druckerfassungssignals,
    - des Arbeitsgas-Referenzdrucks ($p_\infty$), und
    - eines definierten zu pipettierenden Soll-Dosierflüssigkeitsvolumens unter Berücksichtigung einer durch die Kolbenbewegung bewirkten druckänderungsinduzierten Änderung des Arbeitsgas-Bezugsvolumens ($V_T$) anzusteuern, wobei die Steuervorrichtung (24) weiter dazu ausgebildet ist, die zum Pipettieren des Soll-Dosierflüssigkeitsvolumens erforderliche Kolbenbewegung in mehreren aufeinander folgenden Bewegungsschritten auszuführen,

    **dadurch gekennzeichnet, dass** der Pipettierkanal (12) einen ersten Arbeitsbereich (AB1) aufweist, wobei der erste Arbeitsbereich (AB1) bei der Pipettieröffnung (30) beginnt und von dieser in den Pipettierkanal (12) hineinreicht und in einer Umgebungsatmosphäre mit im Wesentlichen konstanter Umgebungstemperatur angeordnet ist, wobei eine Temperatur des ersten Arbeitsbereichs (AB1) nachfolgend als "Basistemperatur" bezeichnet ist, wobei die bekannte Basistemperatur in einem niedrigeren Basistemperaturbereich gelegen ist, wobei der Pipettierkanal (12) einen zweiten Arbeitsbereich (AB2) aufweist, wobei der zweite Arbeitsbereich (AB2) längs einer Wärmequelle der Pipettiervorrichtung (10) existiert, wobei eine Temperatur des zweiten Arbeitsbereichs (AB2) nachfolgend als "Arbeitstemperatur" bezeichnet ist, wobei die bekannte Arbeitstemperatur in einem gegenüber dem Basistemperaturbereich erhöhten Arbeitstemperaturbereich gelegen ist, wobei die Steuervorrichtung (24) dazu ausgebildet ist, nach einem ersten Pipettierkolben-Bewegungsschritt für einen nachfolgenden Pipettierkolben-Bewegungsschritt,

    - eine erste Korrekturgröße, welche eine druckänderungsinduzierte Volumenänderung eines im ersten Arbeitsbereich (AB1) gelegenen Teils des im Pipettierkanal (12) eingeschlossenen Arbeitsgasvolumens repräsentiert, auf Grundlage des Positionserfassungssignals, des Druckerfassungssignals und des Arbeits-

gas-Referenzdrucks ($p_\infty$) zu ermitteln, und

- eine zweite Korrekturgröße, welche eine sowohl druckänderungs- als auch temperaturänderungsinduzierte Volumenänderung eines im zweiten Arbeitsbereich (AB2) gelegenen Teils des im Pipettierkanal (12) eingeschlossenen Arbeitsgasvolumens repräsentiert, auf Grundlage des Positionserfassungssignals, des Druckerfassungssignals, des Arbeitsgas-Referenzdrucks ($p_\infty$), der bekannten Arbeitstemperatur und der bekannten Basistemperatur zu ermitteln,

und ein Soll-Schritt-Bewegungsvolumen des Pipettierkolbens (14) auf Grundlage

- eines dem nachfolgenden Pipettierkolben-Bewegungsschritt zugeordneten Schritt-Referenzvolumens,
- eines bisherigen Verlagerungsvolumens ($V_{Kolben}$) der dosierseitigen Kolbenfläche (14a) des Pipettierkolbens (14) im aktuellen Pipettiervorgang,
- der ersten Korrekturgröße, und
- der zweiten Korrekturgröße

zu ermitteln und die Antriebsvorrichtung (20) nach Maßgabe des ermittelten Soll-Schritt-Bewegungsvolumens anzusteuern.

2. Pipettiervorrichtung (10) nach Anspruch 1,
**dadurch gekennzeichnet, dass** die Steuervorrichtung (24) dazu ausgebildet ist, für den nachfolgenden Pipettierkolben-Bewegungsschritt auf Grundlage des bisherigen Verlagerungsvolumens ($V_{Kolben}$) der dosierseitigen Kolbenfläche (14a) des Pipettierkolbens im aktuellen Pipettiervorgang, der ersten Korrekturgröße, und der zweiten Korrekturgröße einen Schätzwert ($V_{liquid}$) für eine im Aufnahmeraum (28) vorhandene Dosierflüssigkeitsmenge (29) zu bestimmen, den bestimmten Schätzwert ($V_{liquid}$) mit dem Schritt-Referenzvolumen zu vergleichen und auf Grundlage des Vergleichsergebnisses das Soll-Schritt-Bewegungsvolumen zu ermitteln.

3. Pipettiervorrichtung (10) nach Anspruch 2,
**dadurch gekennzeichnet, dass** die Steuervorrichtung (24) dazu ausgebildet ist, aufeinander folgende Pipettierkolben-Bewegungsschritte solange auszuführen, bis ein Unterschiedsbetrag zwischen dem bestimmten Schätzwert und dem Schritt-Referenzvolumen einen vorbestimmten Unterschieds-Schwellenwert unterschreitet oder dazu ausgebildet ist, eine vorbestimmte Anzahl an Pipettierkolben-Bewegungsschritten auszuführen.

4. Pipettiervorrichtung (10) nach einem der Ansprüche 2 oder 3,
**dadurch gekennzeichnet, dass** die Steuervorrichtung (24) dazu ausgebildet ist, einen Unterschiedsbetrag zwischen dem bestimmten Schätzwert ($V_{liquid}$) und dem Schritt-Referenzvolumen zu berechnen und einen zum Unterschiedsbetrag proportionalen Anteil eines Schritt-Korrekturbewegungsvolumens oder/und einen eine Summe aus dem Unterschiedsbetrag und wenigstens einem zurückliegenden Unterschiedsbetrag berücksichtigenden integralen Anteil des Schritt-Korrekturbewegungsvolumens oder/und einen eine Differenz zwischen dem Unterschiedsbetrag und einem zurückliegenden Unterschiedsbetrag berücksichtigenden differenziellen Anteil des Schritt-Korrekturbewegungsvolumens zu ermitteln.

5. Pipettiervorrichtung (10) nach einem der vorhergehenden Ansprüche,
**dadurch gekennzeichnet, dass** die Steuervorrichtung (24) dazu ausgebildet ist, mehr als 100, vorzugsweise mehr als 1000, besonders bevorzugt mehr als 10000 Pipettierkolben-Bewegungsschritte pro Sekunde auszuführen, wobei die Steuervorrichtung dazu ausgebildet ist, weniger als 100000 Pipettierkolben-Bewegungsschritte pro Sekunde auszuführen.

6. Pipettiervorrichtung (10) nach einem der vorhergehenden Ansprüche,
**dadurch gekennzeichnet, dass** die Steuervorrichtung (24) dazu ausgebildet ist, das dem nachfolgenden Pipettierkolben-Bewegungsschritt zugeordnete Schritt-Referenzvolumen nach Maßgabe des Soll-Dosierflüssigkeitsvolumens aus einem Datenspeicher auszulesen oder/und auf Grundlage des Soll-Dosierflüssigkeitsvolumens zu berechnen.

7. Pipettiervorrichtung (10) nach einem der vorhergehenden Ansprüche,
**dadurch gekennzeichnet, dass** entweder

- das Schritt-Referenzvolumen ein inkrementelles Schritt-Referenzvolumen ist, wobei der kumulierte Wert der Schritt-Referenzvolumina über die ansteigende Anzahl an Schritten einen ersten Schrittbereich (44) aufweist, in welchem der kumulierte Wert von einem Anfangswert auf einen Betrag von wenigstens 95 % des Soll-Dosierflüssigkeitsvolumens ansteigt, und einen auf den ersten Schrittbereich (44) folgenden zweiten Schrittbereich (46) aufweist, in welchem der kumulierte Wert einen Bereich von 95 % bis 105 % des Soll-Dosierflüssigkeitsvolumens nicht verlässt,

oder

- das Schritt-Referenzvolumen ein absolutes Schritt-Referenzvolumen ist, wobei der Wert des absoluten Schritt-Referenzvolumens über die ansteigende Anzahl an Schritten einen ersten Schrittbereich (44) aufweist, in welchem der Wert des absoluten Schritt-Referenzvolumens von einem Anfangswert auf einen Betrag von wenigstens 95 % des Soll-Dosierflüssigkeitsvolumens ansteigt, und einen auf den ersten Schrittbereich (44) folgenden zweiten Schrittbereich (46) aufweist, in welchem Wert des absoluten Schritt-Referenzvolumens einen Bereich von 95 % bis 105 % des Soll-Dosierflüssigkeitsvolumens nicht verlässt,

wobei der zweite Schrittbereich (46) wenigstens die gleiche Anzahl an Schritten aufweist oder/und über wenigstens die gleiche Zeitdauer fortdauert als der erste Schrittbereich.

8. Pipettiervorrichtung (10) nach einem der vorhergehenden Ansprüche,
**dadurch gekennzeichnet, dass** die Steuervorrichtung (24) dazu ausgebildet ist, die zweite Korrekturgröße zu bilden auf Grundlage des im zweiten Arbeitsbereich (AB2) gelegenen Teils des Arbeitsgases (34) und einem Produkt aus einem Druckquotienten und einem Temperaturquotienten, wobei der Druckquotient ein Quotient aus dem erfassten Arbeitsgasdruck ($p_{AB1}$) und dem Arbeitsgas-Referenzdruck ($p_\infty$) ist und wobei der Temperaturquotient ein Quotient aus der Arbeitstemperatur ($T_{AB2}$) und der Basistemperatur ($T_\infty$) ist.

9. Pipettiervorrichtung (10) nach einem der vorhergehenden Ansprüche,
**dadurch gekennzeichnet, dass** die Antriebsvorrichtung (20) einen Linearmotor umfasst, dessen Läufer der Pipettierkolben (14) ist, wobei die Arbeitsvorrichtung (20) eine Mehrzahl von bestrombaren Spulen (22) umfasst, welche längs einer Antriebsstrecke radial außerhalb des Pipettierkanals (12) angeordnet sind, wobei der zweite Arbeitsbereich (AB2) die Antriebsstrecke umfasst oder ist.

10. Pipettiervorrichtung (10) nach einem der vorhergehenden Ansprüche,
**dadurch gekennzeichnet, dass** sich der erste Arbeitsbereich (AB1) ausgehend von der Pipettieröffnung (30) in Richtung zum Pipettierkolben (14) hin erstreckt, vorzugsweise bis zum zweiten Arbeitsbereich (AB2).

11. Pipettiervorrichtung (10) nach einem der vorhergehenden Ansprüche,
**dadurch gekennzeichnet, dass** die Pipettiervorrichtung (10) einen Temperatursensor (23) zur Erfassung der Arbeitstemperatur ($T_{AB2}$) aufweist, welcher ein die Arbeitstemperatur ($T_{AB2}$) repräsentierendes Arbeitstemperatursignal ausgibt.

12. Pipettiervorrichtung (10) nach einem der vorhergehenden Ansprüche,
**dadurch gekennzeichnet, dass** der Pipettierkanal (12) einen vorrichtungsfesten Kanalabschnitt (13) mit einer Kopplungsformation und eine lösbar an die Kopplungsformation gekoppelte Pipettierspitze (26) umfasst, wobei die Pipettierspitze (26) die Pipettieröffnung (30) aufweist.

13. Pipettiervorrichtung (10) nach einem der vorhergehenden Ansprüche,
**dadurch gekennzeichnet, dass** die Steuervorrichtung (24) dazu ausgebildet ist, eine dritte Korrekturgröße zu ermitteln, welche eine Leckage des Pipettierkanals (12) repräsentiert, wobei die Steuervorrichtung (24) dazu ausgebildet ist, das Soll-Schritt-Bewegungsvolumen des Pipettierkolbens (14) zusätzlich auf Grundlage der dritten Korrekturgröße zu ermitteln.

14. Pipettiervorrichtung (10) nach Anspruch 13,
**dadurch gekennzeichnet, dass** die Steuervorrichtung (24) dazu ausgebildet ist, die dritte Korrekturgröße auch auf Grundlage eines Leckageparameters zu ermitteln, wobei die Steuervorrichtung (24) weiter dazu ausgebildet ist, auf manuelle Steuerungseingabe hin oder durch vorbestimmte automatisierte Steuerung den Leckageparameter unter Ausführung einer Erfassung einer leckagebedingten zeitlichen Änderung eines anfänglich definierten Arbeitsgasdrucks zu bestimmen.

15. Verfahren zum korrekten Pipettieren einer Dosierflüssigkeit (32) mit einer Pipettiervorrichtung (10) unabhängig von den Fließ- oder/und Benetzungseigenschaften der Dosierflüssigkeit (32), wobei der Pipettierkanal (12) einen ersten Arbeitsbereich (AB1) aufweist, wobei der erste Arbeitsbereich (AB1) bei der Pipettieröffnung (30) beginnt und von dieser in den Pipettierkanal hineinreicht und in einer Umgebungsatmosphäre mit im Wesentlichen konstanter Umgebungstemperatur angeordnet ist, wobei eine Temperatur des ersten Arbeitsbereichs (AB1) nachfolgend als "Basistemperatur" bezeichnet ist, wobei der Pipettierkanal (12) einen zweiten Arbeitsbereich (AB2) aufweist, wobei der zweite Arbeitsbereich (AB2) längs einer Wärmequelle der Pipettiervorrichtung (10) existiert, wobei eine Temperatur des zweiten Arbeitsbereichs (AB2) nachfolgend als "Arbeitstemperatur" bezeichnet ist, wobei die bekannte Basistemperatur ($T\infty$) in einem niedrigeren Basistemperaturbereich gelegen ist, wobei die bekannte Arbeitstemperatur ($T_{AB2}$) in einem gegenüber dem Basistemperaturbereich erhöhten Arbeitstemperaturbereich gelegen ist, wobei das Verfahren eine schrittweise Verlagerung eines in einem Pipettierkanal (12) beweglich aufgenommenen Pipettierkolbens (14) durchführt, wobei im Pipettierkanal (12) unmittelbar an die dosierseitige Kolbenfläche (14a) des Pipettierkolbens (14) angrenzend Arbeitsgas (34) aufgenommen ist, wobei das Verfahren nach einem ersten Bewegungsschritt des Pipettierkolbens (14) für einen nachfolgenden Pipettierkolben-Bewegungsschritt die folgenden Verfahrensschritte umfasst:

- Erfassen des Drucks ($p_{AB1}$) des Arbeitsgases (34) durch eine Druckerfassungsvorrichtung (38),
- Erfassen der Pipettierkolbenposition durch eine Positionserfassungsvorrichtung (19),
- Ermitteln einer ersten Korrekturgröße, welche eine druckänderungsinduzierte Volumenänderung eines in dem ersten Arbeitsbereich (AB1) gelegenen ersten Teils eines im Pipettierkanal (12) eingeschlossenen Arbeitsgasvolumens (34) repräsentiert, auf Grundlage der erfassten Pipettierkolbenposition, des erfassten Arbeitsgasdrucks ($p_{AB1}$) und eines Arbeitsgas-Referenzdrucks ($p_\infty$),
- Ermitteln einer zweiten Korrekturgröße, welche eine sowohl druckänderungs- als auch temperaturänderungsinduzierte Volumenänderung eines im zweiten Arbeitsbereich (AB2) gelegenen Teils des im Pipettierkanal (12) eingeschlossenen Arbeitsgasvolumens (34) repräsentiert, auf Grundlage der erfassten Pipettierkolbenposition, des erfassten Arbeitsgasdrucks ($p_{AB1}$), des Arbeitsgas-Referenzdrucks ($p_\infty$), der bekannten Arbeitstemperatur ($T_{AB2}$) und der bekannten Basistemperatur($T\infty$),
- Ermitteln eines Schätzwertes ($V_{liquid}$) für im Aufnahmeraum (28) vorhandene Dosierflüssigkeitsmenge (29) auf Grundlage der erfassten Pipettierkolbenposition, einer früheren Pipettierkolbenposition, der ersten Korrekturgröße, und der zweiten Korrekturgröße,
- Ermitteln oder Abrufen aus einem Datenspeicher eines dem nachfolgenden Pipettierkolben-Bewegungsschritt zugeordneten Schritt-Referenzvolumens,
- Vergleichen des Schätzwertes ($V_{liquid}$) und des Schritt-Referenzvolumens miteinander,
- Ermitteln eines Soll-Schritt-Bewegungsvolumens zur Verlagerung des Pipettierkolbens im nachfolgenden Pipettierkolben-Bewegungsschritt.
- Verlagern des Pipettierkolbens (14) um das Soll-Schritt-Bewegungsvolumen.

## Claims

1. Pipetting device (10) for pipetting, that is, for aspiration and/or for dispensing, of a dosing liquid (32) under the mediation of a working gas (34), wherein the pipetting device (10) comprises:

- a pipetting duct (12) extending along a duct axis (K),
- a pipetting piston (14) movable in the pipetting duct (12) along the duct axis (K),
- an accommodating space (28) for accommodating dosing liquid (32), which extends in the pipetting duct (12) along the duct axis (K) from a pipetting aperture (30) at one end up to a dosing-side piston surface (14a) of the pipetting piston (14) facing towards the pipetting aperture (30) at the other end, wherein working gas (34) is accommodated in the pipetting duct (12) immediately adjacent to the dosing-side piston surface (14a), wherein a working gas reference volume ($V_T$) is defined by the volume of working gas (34) which is situated in the accommodating space (28) under a working gas reference pressure ($p_\infty$),
- a driving device (20) coupled in a force-transmitting manner with the pipetting piston (14), configured to displace the pipetting piston (14) along the duct axis (K),
- a position acquisition device (19) which acquires a position of the pipetting piston (14) along the duct axis (K) and outputs a position acquisition signal representing the acquired position,
- a pressure acquisition device (38) which acquires a pressure of the working gas (34) in the pipetting duct (12) and outputs a pressure acquisition signal representing the acquired pressure, and
- a control device (24),
wherein the control device (24) is configured to actuate the driving device (20) in accordance with

- the pressure acquisition signal,

- the working gas reference pressures ($p_\infty$), and
- a defined target dosing liquid volume to be pipetted,

taking into account a pressure change-induced change in the working gas reference volume ($V_T$) effected by the piston movement,

wherein the control device (24) is further configured to perform the piston movement required for pipetting the target dosing liquid volume in several consecutive movement steps,

**characterized in that** the pipetting duct (12) exhibits a first working range (AB1) wherein the first working range (AB1) begins at the pipetting aperture (30) and extends from there into the pipetting duct (12) and is arranged in an ambient atmosphere with a substantially constant ambient temperature, wherein a temperature of the first working range (AB1) is hereinafter referred to as the "base temperature," wherein the known base temperature is located in a lower base temperature range, wherein the pipetting duct (12) has a second working range (AB2), wherein the second working range (AB2) exists along a heat source of the pipetting device (10), wherein a temperature of the second working range (AB2) is hereinafter referred to as the "working temperature," wherein the known working temperature lies in a working temperature range higher than the base temperature range, wherein the control device (24) is configured, after a first pipetting piston movement step for a subsequent pipetting piston movement step,

- to establish a first correction variable which represents a pressure change-induced volume change in a part, located in the first working range (AB1), of the of the working gas volume enclosed in the pipetting duct (12), on the basis of the position acquisition signal, of the pressure acquisition signal, and of the working gas reference pressure ($p_\infty$), and
- to establish a second correction variable which represents a both pressure change-induced and temperature change-induced volume change in a part, located in the second working range (AB2), of the working gas volume enclosed in the pipetting duct (12), on the basis of the position acquisition signal, of the pressure acquisition signal, of the working gas reference pressure ($p_\infty$), of the known working temperature, and of the known base temperature,

and to establish a target step movement volume of the pipetting piston (14) on the basis of

- a step reference volume assigned to the subsequent pipetting piston movement step,
- a previous displacement volume ($V_{piston}$) of the dosing-side piston surface (14a) of the pipetting piston (14) in the current pipetting procedure,
- the first correction variable, and
- the second correction variable

and to actuate the driving device (20) in accordance with the established target step movement volume.

2. Pipetting device (10) according to Claim 1,
**characterized in that** the control device (24) is configured to determine, for the subsequent pipetting piston movement step on the basis of the previous displacement volume ($V_{piston}$) of the dosing-side piston surface (14a) of the pipetting piston in the current pipetting procedure, of the first correction variable, and of the second correction variable an estimated value ($V_{liquid}$) for a dosing liquid quantity (29) present in the accommodating space (28), to compare the determined estimated value ($V_{liquid}$) with the step reference volume, and on the basis of the comparison result to establish the target step movement volume.

3. Pipetting device (10) according to Claim 2,
**characterized in that** the control device (24) is configured to perform consecutive pipetting piston movement steps until a difference quantity between the determined estimated value and the step reference volume falls below a predetermined difference threshold value or is configured to perform a predetermined number of pipetting piston movement steps.

4. Pipetting device (10) according to one of the Claims 2 or 3,
**characterized in that** the control device (24) is configured to calculate a difference quantity between the determined estimated value ($V_{liquid}$) and the step reference volume and to establish a fraction proportional to the difference quantity of a step-correction movement volume and/or an integral fraction of the step-correction movement volume which takes into account a sum of the difference quantity and at least one preceding difference quantity and/or a differential fraction of the step-correction movement volume which takes into account a difference between the difference quantity and a preceding difference quantity.

5. Pipetting device (10) according to one of the preceding Claims, **characterized in that** the control device (24) is configured to perform more than 100, preferably more than 1000, especially preferably more than 10000 pipetting piston movement steps per second, wherein the control device is configured to perform fewer than 100000 pipetting piston movement steps per second.

6. Pipetting device (10) according to one of the preceding Claims, **characterized in that** the control device (24) is configured to read out from a data memory the step reference volume assigned to the subsequent pipetting piston movement step in accordance with the target dosing liquid volume and/or to calculate the same on the basis of the target dosing liquid volume.

7. Pipetting device (10) according to one of the preceding Claims, **characterized in that** either

- the step reference volume is an incremental step reference volume, wherein the cumulative value of the step reference volumes over the increasing number of steps exhibits a first step range (44) in which the cumulative value increases from an initial value to a quantity of at least 95% of the target dosing liquid volume, and exhibits a second step range (46) following the first step range (44) in which the cumulative value does not depart from a range of 95% to 105% of the target dosing liquid volume,
or
- the step reference volume is an absolute step reference volume, wherein the value of the absolute step reference volume exhibits over the increasing number of steps a first step range (44) in which the value of the absolute step reference volume increases from an initial value to a quantity of at least 95% of the target dosing liquid volume, and exhibits a second step range (46) following the first step range (44) in which the value of the absolute step reference volume does not depart from a range of 95% to 105% of the target dosing liquid volume,

wherein the second step range (46) exhibits at least the same number of steps and/or lasts for at least the same time duration as the first step range.

8. Pipetting device (10) according to one of the preceding Claims, **characterized in that** the control device (24) is configured to form the second correction variable on the basis of the part of the working gas (34) located in the second working range (AB2) and a product of a pressure ratio and a temperature ratio, wherein the pressure ratio is a ratio of the acquired working gas pressure ($p_{AB1}$) and the working gas reference pressure ($p\infty$) and wherein the temperature ratio is a ratio of the working temperature ($T_{AB2}$) and the base temperature ($T\infty$).

9. Pipetting device (10) according to one of the preceding Claims, **characterized in that** the driving device (20) comprises a linear motor whose rotor is the pipetting piston (14), wherein the operating device (20) comprises a plurality of current-carrying coils (22) arranged along a drive section radially outside the pipetting duct (12), wherein the second working range (AB2) comprises or is the drive section.

10. Pipetting device (10) according to one of the preceding Claims, **characterized in that** the first working range (AB1) extends starting from the pipetting aperture (30) in the direction towards the pipetting piston (14), preferably up to the second working range (AB2).

11. Pipetting device (10) according to one of the preceding Claims, **characterized in that** the pipetting device (10) exhibits a temperature sensor (23) for acquiring the working temperature ($T_{AB2}$) which outputs a working temperature signal representing the working temperature ($T_{AB2}$).

12. Pipetting device (10) according to one of the preceding Claims, **characterized in that** the pipetting duct (12) comprises a device-fixed duct section (13) with a coupling formation and a pipetting tip (26) coupled detachably to the coupling formation, wherein the pipetting tip (26) exhibits the pipetting aperture (30).

13. Pipetting device (10) according to one of the preceding Claims, **characterized in that** the control device (24) is configured to establish a third correction variable which represents a leakage of the pipetting duct (12), wherein the control device (24) is configured to additionally establish the target step movement volume of the pipetting piston (14) on the basis of the third correction variable.

14. Pipetting device (10) according to Claim 13,
**characterized in that** the control device (24) is configured to establish the third correction variable also on the basis of a leakage parameter, wherein the control device (24) is further configured to determine the leakage parameter in response to a manual control input or through predetermined automated control while performing a acquisition of a leakage-induced temporal change of an initially defined working gas pressure.

15. Method for correct pipetting of a dosing liquid (32) with a pipetting device (10), independently of the flow and/or wetting properties of the dosing liquid (32), wherein the pipetting duct (12) exhibits a first working range (AB1), wherein the first working range (AB1) begins at the pipetting aperture (30) and extends from there into the pipetting duct and is arranged in an ambient atmosphere with a substantially constant ambient temperature, wherein a temperature of the first working range (AB1) is hereinafter referred to as the "base temperature", wherein the pipetting duct (12) has a second working range (AB2), wherein the second working range (AB2) exists along a heat source of the pipette-mating device (10), wherein a temperature of the second working range (AB2) is hereinafter referred to as the "working temperature," wherein the known base temperature ($T_\infty$) lies in a lower base temperature range wherein the known working temperature ($T_{AB2}$) lies in a working temperature range higher than the base temperature range, wherein the method performs a stepwise displacement of a pipetting piston (14) accommodated movably in a pipetting duct (12), wherein working gas (34) is accommodated in the pipetting channel (12) immediately adjacent to the dosing-side piston surface (14a) of the pipetting piston (14), wherein the method after a first movement step of the pipetting piston (14) for a subsequent pipetting piston movement step comprises the following method steps:

- acquiring the pressure ($p_{AB1}$) of the working gas (34) by a pressure acquisition device (38),
- acquiring the pipetting piston position by a position acquisition device (19),
- establishing a first correction variable which represents a pressure change-induced volume change of a first part located in the first working range (AB1) of a working gas volume (34) enclosed in the pipetting duct (12), on the basis of the acquired pipetting piston position, the acquired working gas pressure ($p_{AB1}$), and a working gas reference pressure ($p_\infty$),
- establishing a second correction variable which represents a both pressure change-induced and temperature change-induced volume change of a part located in the second working range (AB2) of the working gas volume (34) enclosed in the pipetting duct (12), on the basis of the acquired pipetting piston position, the acquired working gas pressure ($p_{AB1}$), the working gas reference pressure ($p_\infty$), the known working temperature ($T_{AB2}$), and the known base temperature($T_\infty$),
- establishing an estimated value ($V_{liquid}$) for dosing liquid quantity (29) present in the accommodating space (28) on the basis of the acquired pipetting piston position, an earlier pipetting piston position, the first correction variable, and the second correction variable,
- establishing or retrieving from a data memory a step reference volume assigned to the subsequent pipetting piston movement step,
- comparing the estimated value ($V_{liquid}$) and the step reference volume with one another,
- establishing a target step movement volume for displacement of the pipetting piston in the subsequent pipetting piston movement step.
- displacing the pipetting piston (14) by the target step movement volume.


**Revendications**

1. Dispositif de pipetage (10) pour pipeter, c'est-à-dire pour aspirer et/ou dispenser, un liquide de dosage (32) à l'aide d'un gaz de travail (34), le dispositif de pipetage (10) comprenant :

- un canal de pipetage (12) s'étendant le long d'un axe de canal (K),
- un piston de pipetage (14) mobile dans le canal de pipetage (12) le long de l'axe de canal (K),
- un espace de réception (28) destiné à recevoir du liquide à doser (32), qui s'étend dans le canal de pipetage (12) le long de l'axe (K) du canal, depuis une ouverture de pipetage (30) à une extrémité jusqu'à une surface de piston (14a) côté dosage, tournée vers l'ouverture de pipetage (30), du piston de pipetage (14) à l'autre extrémité, le gaz de travail (34) étant admis dans le canal de pipetage (12) directement à côté de la surface du piston côté dosage (14a) du piston de pipetage (14), un volume de référence de gaz de travail ($V_T$) étant défini par le volume de gaz de travail (34) qui se trouve dans l'espace de réception (28) sous une pression de référence de gaz de travail (p∞)
- un dispositif d'entraînement (20) couplé au piston de pipetage (14) de manière à transmettre la force, qui est conçu pour déplacer le piston de pipetage (14) le long de l'axe du canal (K),
- un dispositif de détection de position (19) qui détecte une position du piston de pipetage (14) le long de l'axe (K) du canal et émet un signal de détection de position représentant la position détectée,
- un dispositif de détection de pression (38) qui détecte une pression du gaz de travail (34) dans le canal de pipetage (12) et émet un signal de détection de pression représentant la pression détectée, et
- un dispositif de commande (24),
le dispositif de commande (24) étant conçu pour commander le dispositif d'entraînement (20) en fonction

- du signal de détection de pression,
- de la pression de référence du gaz de travail (p∞), et
- d'un volume de liquide de dosage de consigne défini à pipeter en tenant compte d'une variation du volume de référence du gaz de travail ($V_T$) induite par la variation de pression provoquée par le mouvement du piston,

le dispositif de commande (24) étant en outre conçu pour exécuter le mouvement du piston nécessaire au pipetage du volume de liquide de dosage de consigne en plusieurs étapes successives,
**caractérisé en ce que** le canal de pipetage (12) comporte une première zone de travail (AB1), la première zone de travail (AB1) commençant au niveau de l'ouverture de pipetage (30) et s'étendant à partir de celle-ci dans le canal de pipetage (12) et étant disposée dans une atmosphère ambiante à température ambiante essentiellement constante, une température de la première zone de travail (AB1) étant désignée ci-après par « température de base », la température de base connue étant située dans une zone de températures de base plus basse, le canal de pipetage (12) comportant une deuxième zone de travail (AB2), la deuxième zone de travail (AB2) existant le long d'une source de chaleur du dispositif de pipetage (10), une température de la deuxième zone de travail (AB2) étant désignée ci-après par « température de travail », la température de travail connue étant comprise dans une zone de températures de travail supérieure à la zone de températures de base, le dispositif de commande (24) étant conçu pour, après une première étape de déplacement du piston de pipetage, pour une étape de déplacement suivante du piston de pipetage,

- une première grandeur de correction, qui représente une variation de volume induite par une variation de pression d'une partie du volume de gaz de travail enfermé dans le canal de pipetage (12) et située dans la première zone de travail (AB1), sur la base du signal de détection de position, du signal de détection de pression et de la pression de référence du gaz de travail (p∞), et
- une deuxième grandeur de correction qui représente une variation de volume induite à la fois par une variation de pression et par une variation de température d'une partie du volume de gaz de travail enfermé dans le canal de pipetage (12) située dans la deuxième zone de travail (AB2) de la partie du volume de gaz de travail enfermé dans le canal de pipetage (12), sur la base du signal de détection de position, du signal de détection de pression, de la pression de référence du gaz de travail (p∞), de la température de travail connue et de la température de base connue,

et un volume de mouvement à étape de consigne du piston de pipetage (14) sur la base

- d'un volume de référence d'étape associé à l'étape de mouvement suivant du piston de pipetage,
- d'un volume de déplacement ($V_{piston}$) jusqu'à présent de la surface de piston (14a) côté dosage du piston de pipetage (14) dans le processus de pipetage actuel,
- de la première grandeur de correction, et
- de la deuxième grandeur de correction

et de commander le dispositif d'entraînement (20) en fonction du volume de de mouvement à étape de consigne déterminé.

2. Dispositif de pipetage (10) selon la revendication 1,
**caractérisé en ce que** le dispositif de commande (24) est conçu pour déterminer, pour l'étape de mouvement suivante du piston de pipetage, sur la base du volume de déplacement ($V_{piston}$) déjà déplacé de la surface du piston côté dosage (14a) du piston de pipetage dans le processus de pipetage en cours, de la première grandeur de correction et de la deuxième grandeur de correction, une valeur estimée ($V_{liquide}$) pour une quantité de liquide de dosage (29) présente dans la chambre de réception (28), pour comparer la valeur estimée déterminée ($V_{liquid}$) au volume de référence d'étape et pour déterminer le volume de mouvement à étape de consigne sur la base du résultat de la comparaison.

3. Dispositif de pipetage (10) selon la revendication 2,
**caractérisé en ce que** le dispositif de commande (24) est conçu pour exécuter des étapes de mouvement successives du piston de pipetage jusqu'à ce qu'une différence entre la valeur estimée déterminée et le volume de référence d'étape passe en dessous d'une valeur seuil de différence prédéfinie ou est conçu pour d'exécuter un nombre prédéterminé d'étapes de mouvement du piston de pipetage.

4. Dispositif de pipetage (10) selon l'une des revendications 2 ou 3,
**caractérisé en ce que** le dispositif de commande (24) est conçu pour calculer une différence entre la valeur estimée déterminée ($V_{liquide}$) et le volume de référence d'étape et pour calculer une partie proportionnelle à la différence d'un volume de correction de mouvement d'étape et/ou une proportion intégrale du volume de correction de mouvement d'étape tenant compte d'une somme de la différence et d'au moins une différence antérieure ou/et une partie différentielle du volume de correction de mouvement d'étape tenant compte d'une différence entre la différence et une différence antérieure.

5. Dispositif de pipetage (10) selon l'une des revendications précédentes,
**caractérisé en ce que** le dispositif de commande (24) est conçu pour exécuter plus de 100, de préférence plus de 1000, de préférence plus de 10 000, de préférence plus de 10 000, étapes de mouvement du piston de pipetage par seconde, le dispositif de commande étant conçu pour exécuter moins de 100 000 étapes de mouvement du piston de pipetage par seconde.

6. Dispositif de pipetage (10) selon l'une des revendications précédentes,
**caractérisé en ce que** le dispositif de commande (24) est conçu pour lire le volume de référence associé à l'étape de mouvement du piston de pipetage suivante à partir d'une mémoire de données en fonction du volume de liquide de dosage de consigne ou/et pour calculer le volume de référence d'étape sur la base du volume de liquide de dosage de consigne.

7. Dispositif de pipetage (10) selon l'une des revendications précédentes,
**caractérisé en ce que** soit

   - le volume de référence d'étape est un volume de référence d'étape incrémental, la valeur cumulée des volumes de référence d'étape sur le nombre croissant d'étapes présentant une première zone d'étapes (44) dans laquelle la valeur cumulée passe d'une valeur initiale à une valeur d'au moins 95 % du volume de liquide de dosage de consigne, et une deuxième zone d'étapes (46) suivant la première zone d'étapes (44), dans laquelle la valeur cumulée ne quitte pas une zone comprise entre 95 % et 105 % du volume de liquide de dosage de consigne, soit
   - le volume de référence d'étape est un volume de référence absolu d'étape, la valeur du volume de référence absolu d'étape présentant, sur le nombre croissant d'étapes, une première zone d'étapes (44) dans laquelle la valeur du volume de référence absolu d'étape augmente d'une valeur minimale à une valeur initiale jusqu'à une valeur initiale d'au moins 95 % du volume de liquide de dosage de consigne, et une deuxième zone d'étapes (46) suivant la première zone d'étapes (44) dans laquelle la valeur cumulée ne quitte pas une plage comprise entre 95 % et 105 % du volume de liquide de dosage de consvolumes de référence augmente d'une valeur initiale jusqu'à une valeur d'au moins 95 % du volume de liquide de dosage de consigne, et une deuxième zone d'étapes (46) qui suit la première zone d'étapes (44) et dans laquelle la valeur du volume de référence absolu référence absolue ne quitte pas une plage comprise entre 95 % et 105 % du volume de liquide de dosage de consigne,

   la deuxième zone d'étapes (46) comportant au moins le même nombre d'étapes et/ou durant au moins la même durée que la première zone d'étapes.

8. Dispositif de pipetage (10) selon l'une des revendications précédentes,
**caractérisé en ce que** le dispositif de commande (24) est conçu pour former la deuxième grandeur de correction sur la base de la partie du gaz de travail (34) située dans la deuxième plage de travail (AB2) et d'un produit d'un quotient de pression et d'un quotient de température, le quotient de pression étant un quotient de la pression de gaz de travail détectée ($p_{AB1}$) et de la pression de référence du gaz de travail ($p\infty$) et le quotient de température étant un quotient de la température de travail ($T_{AB2}$) et de la température de base ($T_{\infty}$).

9. Dispositif de pipetage (10) selon l'une des revendications précédentes,
**caractérisé en ce que** le dispositif d'entraînement (20) comprend un moteur linéaire dont le rotor est le piston de pipetage (14), le dispositif de travail (20) comprenant une pluralité de bobines pouvant être alimentées en courant (22) qui sont disposées le long d'un trajet d'entraînement radialement à l'extérieur du canal de pipetage (12), la deuxième zone de travail (AB2) comprenant ou étant le trajet d'entraînement.

10. Dispositif de pipetage (10) selon l'une des revendications précédentes, **caractérisé en ce que** la première zone de travail (AB1) s'étend à partir de l'ouverture de pipetage (30) en direction du piston de pipetage (14), de préférence jusqu'à la deuxième zone de travail (AB2).

11. Dispositif de pipetage (10) selon l'une des revendications précédentes, **caractérisé en ce que** le dispositif de pipetage (10) comporte un capteur de température (23) pour détecter la température de travail ($T_{AB2}$), qui émet un signal de température de travail représentant la température de travail ($T_{AB2}$).

12. Dispositif de pipetage (10) selon l'une des revendications précédentes, **caractérisé en ce que** le canal de pipetage (12) comprend une section de canal (13) fixe au dispositif avec une formation de couplage et une pointe de pipetage (26) couplée de manière amovible à la formation de couplage, la pointe de pipetage (26) présentant l'ouverture de pipetage (30).

13. Dispositif de pipetage (10) selon l'une des revendications précédentes, **caractérisé en ce que** le dispositif de commande (24) est conçu pour déterminer une troisième grandeur de correction qui représente une fuite du canal de pipetage (12) (12), le dispositif de commande (24) étant conçu pour déterminer en outre le volume de mouvement à étape de consigne du piston de pipetage (14) sur la base de la troisième grandeur de correction.

14. Dispositif de pipetage (10) selon la revendication 13, **caractérisé en ce que** le dispositif de commande (24) est conçu pour déterminer la troisième grandeur de correction aussi sur la base d'un paramètre de fuite, le dispositif de commande (24) étant en outre conçu pour déterminer le paramètre de fuite en réponse à une entrée de commande manuelle ou par une commande automatisée prédéfinie en effectuant une détection d'une variation dans le temps, due à une fuite, d'une pression de gaz de travail initialement définie.

15. Procédé pour pipeter correctement un liquide de dosage (32) avec un dispositif de pipetage (10) indépendamment des propriétés d'écoulement et/ou de mouillage du liquide de dosage (32), le canal de pipetage (12) présentant une première zone de travail (AB1), la première zone de travail (AB1) commençant au niveau de l'ouverture de pipetage (30) et s'étendant à partir de celle-ci dans le canal de pipetage et étant disposée dans une atmosphère ambiante à température ambiante essentiellement constante, une température de la première zone de travail (AB1) étant désignée ci-après par « température de base », le canal de pipetage (12) comportant une deuxième zone de travail (AB2), la deuxième zone de travail (AB2) s'étendant le long d'une source de chaleur du dispositif de pipetage (10), une température de la deuxième zone de travail (AB2) étant désignée ci-après par « température de travail », la température de base connue ($T\infty$) étant située dans une zone de température de base plus basse, la température de travail connue ($T_{AB2}$) se situant dans une plage de températures de travail supérieure à la plage de températures de base, le procédé comprenant le déplacement progressif d'un piston de pipetage logé de manière mobile dans un canal de pipetage (12) (14), du gaz de travail (34) étant admis dans le canal de pipetage (12) immédiatement à côté de la surface du piston (14) côté dosage (14a) du piston de pipetage (14), le procédé comprenant, après une première étape de déplacement du piston de pipetage (14) pour une étape de déplacement suivante du piston de pipetage, les étapes du procédé suivantes :

- détection de la pression ($p_{AB1}$) du gaz de travail (34) par un dispositif de détection de pression (38),
- détection de la position du piston de pipetage par un dispositif de détection de position (19),
- détermination d'une première grandeur de correction, qui représente une variation de volume induite par une variation de pression d'une première partie d'un volume de gaz de travail (34) enfermé dans la première zone de travail (AB1) situé dans le canal de pipetage (12), sur la base de la position détectée du piston de pipetage, de la pression de gaz de travail détectée ($p_{AB1}$) et d'une pression de gaz de travail de référence ($p\infty$),
- détermination d'une deuxième grandeur de correction qui représente une variation de volume induite à la fois par la variation de pression et par la variation de température d'une partie du volume de gaz de travail enfermé dans le canal de pipetage (12) et située dans la deuxième zone de travail (AB2) sur la base de la position détectée du piston de pipetage, de la pression détectée du gaz de travail ($p_{AB1}$), de la pression de référence du gaz de travail ($p\infty$), de la température de travail connue ($T_{AB2}$) et de la température de base connue ($T\infty$),
- détermination d'une valeur estimée ($V_{liquid}$) pour la quantité de liquide de dosage (29) présente dans l'espace de réception (28) sur la base de la position détectée du piston de pipetage, d'une position antérieure du piston de pipetage, de la première grandeur de correction et de la deuxième grandeur de correction,
- détermination ou consultation dans une mémoire de données d'un volume de référence d'étape attribué à l'étape de mouvement du piston de pipetage suivante,
- comparaison de la valeur estimée ($V_{liquid}$) et du volume de référence à étape entre eux,
- détermination d'un volume de mouvement à étape de consigne pour le déplacement du piston de pipetage dans l'étape suivante de déplacement du piston de pipetage.
- déplacement du piston de pipetage (14) du volume de mouvement à étape de consigne.

Fig. 1

Fig. 2

Fig. 3

Fig. 4

A)

B)

**IN DER BESCHREIBUNG AUFGEFÜHRTE DOKUMENTE**

**In der Beschreibung aufgeführte Patentdokumente**

- EP 1250956 B1
- US 5895838 A

- DE 19651252 A1